(19) Europäisches Patentamt / European Patent Office / Office européen des brevets

(11) **EP 4 645 227 A1**

(12) **EUROPEAN PATENT APPLICATION**
published in accordance with Art. 153(4) EPC

(43) Date of publication:
**05.11.2025 Bulletin 2025/45**

(21) Application number: **24830349.7**

(22) Date of filing: **28.05.2024**

(51) International Patent Classification (IPC):
***G06T 11/00*** *(2006.01)*

(52) Cooperative Patent Classification (CPC):
**G06T 3/00; G06T 11/00**

(86) International application number:
**PCT/CN2024/095807**

(87) International publication number:
**WO 2025/001701 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 CN 202310803347**

(71) Applicant: **Tencent Technology (Shenzhen)
Company Limited
Shenzhen, Guangdong 518057 (CN)**

(72) Inventor: **CHEN, Guowen
Shenzhen, Guangdong 518057 (CN)**

(74) Representative: **Nederlandsch Octrooibureau
P.O. Box 29720
2502 LS The Hague (NL)**

(54) **MODEL PROCESSING METHOD, APPARATUS AND DEVICE, AND STORAGE MEDIUM AND COMPUTER PROGRAM PRODUCT**

(57) This application discloses a model processing method, apparatus, and device, a storage medium, and a computer program product. The method includes: obtaining a source head model in response to an obtained expression instruction; performing deformation-related adjustment matching on the source head model to obtain a destination head model according to a pre-defined model feature of a target head model, and determining a deformation parameter according to the destination head model and a deformation relationship from a first model expression to a second model expression in the source head model, the first model expression in the source head model being determined according to the facial expression-neutral feature data of the source head model, and the second model expression in the source head model being determined according to facial expression feature data indicated by the expression instruction in the plurality of pieces of facial expression feature data; and performing expression adjustment on the target head model according to the deformation parameter, to obtain the target head model having the second model expression. The second model expression can be automatically transferred between models, and the second model expression can be automatically generated for the target head model.

FIG. 2

**Description**

RELATED APPLICATION

This application claims priority to Chinese Patent Application No. 202310803347.9, filed with the China National Intellectual Property Administration on June 30, 2023, and entitled "MODEL PROCESSING METHOD, APPARATUS, AND DEVICE, AND STORAGE MEDIUM", which is incorporated herein by reference in its entirety.

FIELD OF THE TECHNOLOGY

This application relates to the field of artificial intelligence, and in particular, to a model processing method, apparatus, and device, a storage medium, and a computer program product.

BACKGROUND OF THE DISCLOSURE

At present, three-dimensional (3D) animation is widely used in various industries, such as Computer Graphics (CG) films, 3D animated films, virtual live streaming, and virtual 3D customer service agents. The content production of 3D expression animation is a critical bottleneck in the industry development. In the related art, a blend shape (BS) is usually generated through manual face sculpting, and a model expression is further constructed based on the generated blend shape. However, different three-dimensional head models usually have different facial features, such as different face contours, different shapes of facial organs, and different distributions of facial organs. Therefore, when model expressions need to be constructed for different three-dimensional head models, the reliance on manual face sculpting, results in low automation and excessive consumption of human resources.

SUMMARY

Embodiments of this application provide a model processing method, apparatus, and device, a storage medium, and a computer program product, to automatically transfer a second model expression between models and automatically generate the second model expression for a target head model.

According to an aspect, an embodiment of this application provides a model processing method. The method includes:

obtaining a source head model in response to an expression instruction, the source head model comprising facial expression-neutral feature data, and a plurality of pieces of facial expression feature data relative to the facial expression-neutral feature data;

performing deformation-related adjustment matching on the source head model to obtain a destination head model according to a pre-defined model feature of a target head model;

determining a deformation parameter according to the destination head model and a deformation relationship from a first model expression to a second model expression in the source head model, the first model expression in the source head model being determined according to the facial expression-neutral feature data of the source head model, and the second model expression in the source head model being determined according to facial expression feature data indicated by the expression instruction in the plurality of pieces of facial expression feature data; and

performing expression adjustment on the target head model according to the deformation parameter, to obtain a target head model having the second model expression.

According to an aspect, an embodiment of this application provides a model processing apparatus. The apparatus includes:

an obtaining unit, configured to obtain a source head model in response to an expression instruction, the source head model comprising facial expression-neutral feature data, and a plurality of pieces of expression feature data relative to the facial expression-neutral feature data; and

a processing unit, configured to perform deformation-related adjustment matching on the source head model to obtain a destination head model according to a pre-defined model feature of a target head model,

the processing unit being further configured to determine a deformation parameter according to the destination head model and a deformation relationship from a first model expression to a second model expression in the source head model, the first model expression in the source head model being determined according to the facial expression-neutral feature data of the source head model, and the second model expression in the source head model being determined according to facial expression feature data indicated by the expression instruction in the plurality of pieces of facial expression feature data; and

the processing unit being further configured to perform expression adjustment on the target head model according to the deformation parameter, to obtain a target head model having the second model expression.

According to an aspect, an embodiment of this application provides a model processing device. The model processing device includes an input interface and an output interface, and further includes:

a processor, configured to implement one or more instructions; and

a computer storage medium, having one or more instructions stored therein, the one or more instructions being suitable for being loaded by the processor to perform the foregoing model processing method.

According to an aspect, an embodiment of this application provides a computer storage medium. The computer storage medium has computer program instructions stored therein, the computer program instructions, when executed by a processor, being configured to perform the foregoing model processing method.

According to an aspect, an embodiment of this application provides a computer program product. The computer program product includes a computer program, the computer program being stored in a computer storage medium. A processor of the model processing device reads the computer program from the computer storage medium, and the processor executes the computer program, to cause the model processing device to perform the foregoing model processing method.

In the embodiments of this application, after the expression movement instruction is obtained, deformation matching may be performed from the source head model to the target head model, so that the source head model subjected to deformation matching approximates the target head model. Further, the deformation parameter may be determined according to the source head model subjected to deformation matching and the deformation relationship from the first model expression in the source head model to the second model expression indicated by the expression movement instruction, and expression transfer may be performed on the target head model according to the deformation parameter, to obtain the target head model having the second model expression. The second model expression can be automatically transferred from the source head model to the target head model. In this way, expression transformation on some target head models (for example, newly designed head models) can be implemented based on expression transformation of some source head models (for example, standard models). The second model expression can be automatically generated for the target head model, and the second model expression in the source head model can be reused in different head models, further improving the efficiency of generating model expressions by different head models, and reducing human resource consumption.

BRIEF DESCRIPTION OF THE DRAWINGS

FIG. 1 is a schematic diagram of blend shapes according to an embodiment of this application.

FIG. 2 is a schematic flowchart of a model processing method according to an embodiment of this application.

FIG. 3 is a schematic flowchart of another model processing method according to an embodiment of this application.

FIG. 4 is a schematic diagram of reference facial keypoints in a two-dimensional face image according to an embodiment of this application.

FIG. 5 is a schematic diagram of position coordinates of target triangles in a source head model and in a source head model subjected to deformation matching according to an embodiment of this application.

FIG. 6 is a schematic diagram of performing expression transfer on a target head model according to an embodiment of this application.

FIG. 7 is a schematic flowchart of another model processing method according to an embodiment of this application.

FIG. 8 is a schematic diagram of feature regions according to an embodiment of this application.

FIG. 9 is a schematic diagram of positioning and rotation of an eyeball region according to an embodiment of this application.

FIG. 10 is a schematic diagram of performing expression transfer on a target head model according to an embodiment of this application.

FIG. 11 is a schematic diagram of determining an eyelid region according to an embodiment of this application.

FIG. 12 is a schematic diagram of a lower eyelid boundary and an upper eyelid boundary according to an embodiment of this application.

FIG. 13 is a schematic diagram of adjusting an eyelid region according to an embodiment of this application.

FIG. 14 is a schematic diagram of a texture coordinate relationship according to an embodiment of this application.

FIG. 15 is a schematic diagram of performing expression transfer on an interaction model according to an embodiment of this application.

FIG. 16 is a schematic diagram of an effect of expression transfer according to an embodiment of this application.

FIG. 17 is a schematic diagram of an application scenario according to an embodiment of this application.

FIG. 18 is a schematic structural diagram of a model processing apparatus according to an embodiment of this application.

FIG. 19 is a schematic structural diagram of a model processing device according to an embodiment of this application.

DESCRIPTION OF EMBODIMENTS

The technical solutions of the embodiments of this application are described below clearly and comprehensively in conjunction with the accompanying drawings of the embodiments of this application. Apparently, the embodiments described are merely some rather than all of the embodiments of this application. Based on the embodiments of this application, all other embodiments obtained by a person of ordinary skill in the art without creative efforts shall fall within the protection scope of this application.

Computer vision is a science that studies how to use a machine to "see", and furthermore, is machine vision that a camera and a computer are used to replace human eyes to perform recognition, measurement, and the like on a target, and further perform graphic processing, so that the computer processes the target into an image more suitable for human eyes to observe, or an image transmitted to an instrument for detection. In the computer vision, which is a scientific discipline, related theories and technologies are researched, to attempt to establish an artificial intelligence system that can obtain information from an image or multi-dimensional data. Large model technologies have brought significant transformations to the development of computer vision technologies. Pre-trained models in vision fields such as Swin-Transformer, vision transformer (ViT), vision mixture-of-experts (V-MoE), and Masked Autoencoder (MAE) can be quickly and widely applied to specific downstream tasks through fine-tuning. The computer vision technologies generally include technologies such as image processing, image recognition, image semantic understanding, image retrieval, optical character recognition (OCR), video processing, video semantic understanding, video content/behavior recognition, three-dimensional (3D) technology, three-dimensional object reconstruction, virtual reality, augmented reality, and simultaneous localization and mapping.

Based on the computer vision technologies mentioned above, an embodiment of this application provides a model processing solution. A source head model (e.g., source face model) may be obtained in response to an obtained expression movement instruction (namely, expression instruction), and deformation matching may be performed on the source head model according to a model feature of a target head model. The target head model is a model to be subjected to expression transfer, to obtain a source head model subjected to deformation matching. The model feature mainly refers to a physical feature of an object such as an eye, an ear, a mouth, and a nose included in the head, for example, a shape and size feature of the object such as the eye, the ear, the mouth, and the nose. Further, the deformation parameter may be determined according to the source head model subjected to deformation matching and a deformation relationship from a first model expression to a second model expression in the source head model, and expression transfer may be performed on the target head model according to the deformation parameter, to obtain the target head model having the second model expression. The source head model is configured with neutral feature data, and a plurality of pieces of expression feature data relative to the neutral feature data; and the first model expression in the source head model is determined according to the neutral feature data of the source head model, and the second model expression in the source head model is determined according to expression feature data indicated by the expression movement instruction in the plurality of pieces of expression feature data.

The model processing solution may be performed by a model processing device, and the model processing device may be a terminal device or a server. The terminal device herein may include, but is not limited to: a computer, a smartphone, a tablet computer, a notebook computer, a smart home appliance, an in-vehicle terminal, a smart wearable device, and the like. The server herein may be an independent physical server, or may be a server cluster including a plurality of physical servers or a distributed system, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. Further, in some embodiments, the model processing solution may alternatively be independently or cooperatively performed by any electronic device having computing power. This is not limited in this embodiment of this application. A model processing device is used as an example for description in subsequent embodiments of this application.

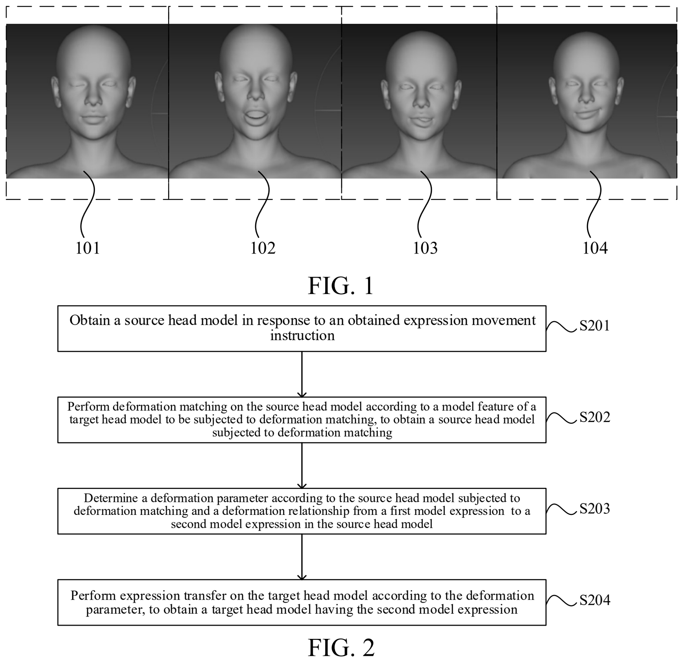

Various models mentioned in the model processing solution may be three-dimensional models, the three-dimensional models may be a set formed by a plurality of triangles, and vertices of the triangles are vertices of the three-dimensional models. The source head model may be a head model configured with neutral feature data and a plurality of pieces of expression feature data relative to the neutral feature data. The neutral feature data and the expression feature data herein refer to a blend shape (BS), and any piece of expression feature data may be obtained by performing deformation based on the neutral feature data. Various model expressions may be obtained based on the neutral feature data or based on one or more of the plurality of pieces of expression feature data through combination. Any model expression may also be considered as a blend shape. In other words, a combination of a plurality of blend shapes may also be considered as a blend shape. A model expression determined based on only the neutral feature data may be referred to as a neutral model expression. The first model expression in the source head model mentioned in the model processing solution is a neutral model expression determined according to the neutral feature data of the source head model. For example, one piece of expression feature data indicating "open mouth" may be combined with one piece of expression feature data indicating "closed eyes" to obtain one model expression indicating "open mouth and closed eyes". FIG. 1 is a schematic diagram of blend shapes according to an embodiment of this application. A blend shape indicated by label 101 is a "neutral" blend shape corresponding to neutral feature data, and a model expression corresponding to the blend shape is a neutral model expression. A blend shape indicated by label 102 is an "open mouth" blend shape corresponding to expression feature data indicating "open mouth", and a model expression corresponding to the blend shape is a model expression indicating "open mouth". A blend shape indicated by label 103 is a "bite lips" blend shape corresponding to expression feature data indicating "bite lips", and a model expression corresponding to the blend shape is a model expression indicating "bite lips". A blend shape indicated by label 104 is a "pursed lips" blend shape corresponding to expression feature data indicating "pursed lips", and a model expression corresponding to the blend shape is a model expression indicating "pursed lips".

In this application, during example application of the relevant data (such as a source head model and a target head model) collection and processing, the informed consent or individual consent of a personal information subject needs to be obtained in strict accordance with the requirements of relevant laws and regulations, and the subsequent data use and processing behavior is carried out within the scope of authorization of laws and regulations and the personal information subject. In addition, when the technologies related to human faces (or other biometric features) are applied to specific products or technologies in the relevant embodiments of this application, the relevant data collection, use, and processing processes need to comply with the requirements of laws and regulations. Before collecting facial information, the information processing rules need to be informed and the individual consent of the corresponding subjects need to be obtained. Facial information needs to be processed in strict accordance with the requirements of laws and regulations and personal information processing rules, and technical measures need to be taken to ensure the security of relevant data.

Based on the model processing solution, an embodiment of this application provides a model processing method. FIG. 2 is a schematic flowchart of a model processing method according to an embodiment of this application. The model processing method shown in FIG. 2 may be performed by the model processing device mentioned above. The model processing method shown in FIG. 2 may include the following operations.

S201: Obtain a source head model in response to an expression instruction (e.g., expression movement instruction).

The source head model includes neutral feature data (e.g., facial expression-neutral feature data), and a plurality of pieces of expression feature data (e.g., facial expression feature data) relative to the neutral feature data. Further, the expression movement instruction may be configured for guiding the model processing device to generate a desired model expression for the source head model. An instruction format of the expression movement instruction may be set according to a specific requirement, for example, may be a text format or a speech format. This is not limited in this embodiment of this application. The model processing device may perform instruction analysis on the expression movement instruction to generate a model expression expected by the expression movement instruction for the source head model. In a feasible implementation, if the expression movement instruction is in a text format, when detecting that the expression movement instruction includes an expression keyword, the model processing device may generate a model expression indicated by the corresponding expression keyword for the source head model. For example, if detecting that the expression movement instruction includes an expression keyword "open mouth", the model processing device may generate a model expression indicating "open mouth" for the source head model. In another feasible implementation, if the expression movement instruction is in a text format, the model processing device may perform semantic analysis on the expression movement instruction, and generate a semantically matching model expression for the source head model. For example, when obtaining through analysis that the expression movement instruction includes a semantic meaning of "surprise", the model processing device may generate a model expression indicating "open mouth" that matches the semantic meaning for the source head model. The neutral feature data may be data of positions of face mesh vertices in a neutral case. A neutral face may be obtained through rendering based on the positions of the neutral face mesh vertices. The neutral face may be, for example, an expressionless face. Similarly, the expression feature data may be data of positions of face mesh vertices under a specific expression. A face under a specific expression can be obtained through rendering based on the expression feature data. For example, with smile expression feature data, a smiling face can be obtained through rendering based on positions of face mesh vertices under the corresponding smile expression. Certainly, in addition to positions of corresponding face mesh vertices, the neutral feature data and the expression feature data may further include table data. The table data stores a face formed by a plurality of vertices, for example, data of vertices forming a triangular face.

S202: Perform deformation matching (e.g., deformation-related adjustment matching) on the source head model according to a model feature of a target head model, to obtain a source head model subjected to deformation matching (i.e., a destination head model being a source head model subjected to deformation matching). The target head model is a model to be subjected to expression transfer. Model features of the source head model and the target head model are different. The model features may be, for example, facial features of a head model, where the facial features include features such as facial organs, a face shape, a chin, and cheekbones; or the model features are configured for distinguishing between different head models.

In an embodiment, the target head model may be a head model different from the source head model. For example, a face shape of the target head model may be different from that of the source head model, shapes of the facial organs of the target head model may be different from those of the source head model, a distribution of the facial organs of the target head model may be different from that of the source head model, and the like. The model processing device performs deformation matching on the source head model according to the model feature of the target head model, to perform deformation matching from the source head model to the target head model, that is, to adjust the source head model to approximate the target head model. In embodiments of the present application, performing matching adjustment (e.g., deformation-related adjustment matching) on the source head model to obtain a destination head model comprising a pre-defined model feature can include: performing matching adjustment on the distribution of the facial organs of the target head model to obtain the destination head model. For example, one or more of features such as a face shape, shapes of facial organs, and a distribution of facial organs of the source head model may approximate corresponding features of the target head model.

S203: Determine a deformation parameter according to the source head model subjected to deformation matching (i.e., the destination head model) and a deformation relationship from a first model expression to a second model expression in the source head model.

The first model expression in the source head model is determined according to the neutral feature data of the source head model. In other words, the first model expression in the source head model is a neutral model expression. The second model expression in the source head model is determined according to the expression feature data indicated by the expression movement instruction in the plurality of pieces of expression feature data. In other words, the second model expression in the source head model is a model expression generated by the model processing device according to the expression movement instruction. In the process of the model processing device performing instruction analysis on the expression movement instruction to generate a model expression expected by the expression movement instruction for the source head model, the model processing device may first perform instruction analysis on the expression movement instruction to determine expression feature data indicated by the expression movement instruction, and then generate a desired model expression (that is, the second model expression) based on the determined expression feature data. The second model expression is equivalent to an expression determined from a plurality of pieces of existing expression feature data according to the expression movement instruction. In a feasible implementation, if the expression movement instruction is in a text format, when detecting that the expression movement instruction includes an expression keyword, the model processing device may determine, based on the expression keyword, the expression feature data indicated by the expression movement instruction, and further generate a corresponding model expression based on the determined expression feature data. The foregoing manner in which the model processing device performs instruction analysis on the expression movement instruction to generate the model expression expected by the expression movement instruction for the source head model is merely an exemplary manner. For example, when the expression movement instruction includes identifier information of the expression feature data, the model processing device may directly determine expression feature data indicated by the expression movement instruction based on the identifier information included in the expression movement instruction, and may further generate a corresponding model expression.

The deformation relationship between the source head model and the source head model subjected to deformation matching includes a transformation matrix from vertices of a target triangle in the source head model to the corresponding vertices in the source head model subjected to deformation matching. The transformation matrix between the vertices is determined according to an affine transformation parameter and a translation parameter. For calculation of the deformation relationship, reference may be made to related descriptions in subsequent embodiments.

S204: Perform expression adjustment on the target head model according to the deformation parameter, to obtain the target head model having the second model expression.

In an embodiment, the performing expression transfer (namely, expression adjustment) according to the deformation parameter may include: adjusting, according to the deformation parameter, positions of feature points in the target head model having the first model expression, to obtain a target head model implementing the second model expression. When performing expression transfer on the target head model according to the deformation parameter, the model processing device performs, according to the deformation parameter, expression transfer on the target head model having the first model expression, that is, performs, according to the deformation parameter, expression transfer on the target head model having the neutral model expression. The first model expression in the target head model matches the target head model. In other words, the first model expression is determined according to the neutral feature data of the target head model, but is not determined according to the neutral feature data of the source head model. When performing expression transfer on the target head model according to the deformation parameter, the model processing device may adjust, according to the deformation parameter, the positions of the vertices in the target head model having the first model expression, to implement the second model expression based on the target head model. For example, if the second model expression in the source head model is a model expression indicating "open mouth", the positions of the vertices in the target head model having the first model expression may be adjusted according to the deformation parameter, to implement the model expression indicating "open mouth" based on the target head model.

In this embodiment of this application, after the expression movement instruction is obtained, starting from the source head model having the expressionless neutral feature data and the expression feature data, an expression change of the target head model is implemented through transfer based on expression transformation on the source head model. To implement expression transfer, deformation matching is first performed from the source head model to the target head model, so that the source head model subjected to deformation matching approximates the target head model, and the source head model having the neutral feature data and the expression feature data is close to the target head model in shape. Then, a deformation parameter is determined according to the source head model subjected to deformation matching and a deformation relationship from the first model expression in the source head model to the second model expression indicated by the expression movement instruction, and the target head model having the current expression may be transformed into a target head model having the second model expression based on the deformation parameter. The second model expression can be automatically transferred from the source head model to the target head model. In other words, the second model expression can be automatically generated for the target head model. The second model expression in the source head model can be reused in different head models, further improving the efficiency of generating model expressions by different head models, and reducing human resource consumption.

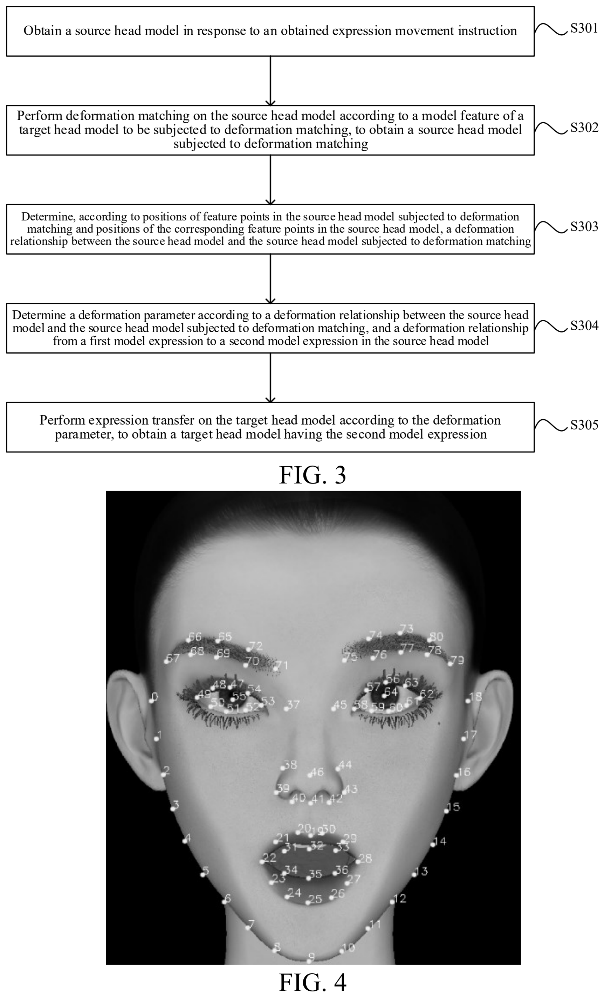

Based on the related embodiments of the foregoing model processing method, an embodiment of this application provides another model processing method. FIG. 3 is a schematic flowchart of another model processing method according to an embodiment of this application. The model processing method shown in FIG. 3 may be performed by the model processing device mentioned above. The model processing method shown in FIG. 3 may include the following operations.

S301: Obtain a source head model in response to an obtained expression movement instruction.

The source head model is configured with neutral feature data, and a plurality of pieces of expression feature data relative to the neutral feature data. A related process of operation S301 is similar to the related process of the foregoing operation S201, and is not described herein again.

S302: Perform deformation matching on the source head model according to a model feature of a target head model, to obtain a source head model subjected to deformation matching.

In an embodiment, the model processing device performs deformation matching on the source head model according to the model feature of the target head model, to perform deformation matching from the source head model to the target head model, that is, to adjust the source head model to approximate the target head model. Adjusting the source head model to approximate the target head model may be understood as: performing rough alignment on the source head model through rigid translation, rotation, and scaling by using spatial positions of keypoints with same names on the source head model and the target head model, to make initial forms of the two models similar, meaning that the two models are substantially close to each other. For example, at least substantially, faces of the source head model and the target head model are similar in size and shape, such as both being both round faces and having face boundaries close to each other. Then, details of the face in the source head model are adjusted by using a plane distance of model vertices, a Euclidean distance between the keypoints with the same name in the two models, and a mesh deformation degree as metrics. By adjusting the keypoints of the source head model, a difference (that is, Euclidean distance) between coordinate positions of keypoints of the adjusted source head model on the adjusted source head model and coordinate positions of the corresponding keypoints (namely, the keypoints with the same name) in the target head model on the target head model satisfies a similarity condition (for example, it is considered that the similarity condition is satisfied if the Euclidean distances are less than a threshold). In addition, deformation of a vertex mesh of the source head model is minimized, and a plane distance between a deformed vertex of the source head model and the target head model minimized. An optimal solution under such three constraints are obtained, and when the optimal solution is reached, the adjusted source head model is considered to approximate the target head model.

In an embodiment, based on positions of the vertices and the keypoints in the source head model and the vertices and the keypoints in the target head model, in a case that the positions of the vertices and the keypoints in the target head model are unchanged, the source head model with modified positions for each vertex and keypoints is calculated, and according to a plane distance of the vertices in the candidate source head model, a Euclidean distance between the keypoints with the same name in the candidate source head model and the target head model, and a mesh deformation degree of the candidate source head model, calculation is performed according to their respective preset weight values, to obtain a candidate source head model having a minimum value after weight calculation, which is determined as a target source head model. The target source head model is a source head model approximating the target head model. Position transformation may be performed on the source head model according to positions of vertices and keypoints in the target source head model, to obtain a source head model subjected to deformation matching, thereby completing deformation matching of the source head model. In other words, values of the positions of the vertices and the keypoints in the source head model are modified, and modified values are incorporated into weight calculation, to obtain values of positions of the vertices and the keypoints when a minimum value is obtained, which are values of the vertices and the keypoints in the target source head model. Deformation matching of the source head model may be completed by performing position adjustment on the source head model according to the values of the vertices and the keypoints in the target source head model, to obtain a source head model approximating the target head model. The plane distance of the vertices in the candidate source head model is a distance from a vertex in the candidate source head model to the corresponding plane of the target head model. The reason for calculating the plane distance corresponding to the vertices in the source head model is that a vertex in the target head model closest to the vertex in the source head model is likely not a specific point in the target head model, but a point on a plane formed by points. The keypoints with the same name in the candidate source head model and the target head model may be, for example, keypoints numbered the same in the candidate source head model and the target head model, for example, keypoints with the same number of an eye corner key point, and keypoints with the same number of a nose tip key point. The mesh deformation degree of the candidate head model may be measured based on a difference between a rotation part in a transformation matrix and an identity matrix before and after deformation of a triangular face in the candidate source head model.

In an embodiment, the facial keypoints may be points that may be configured for indicating facial features, for example, may be points that indicate facial features such as a nose tip, an eyeball, a face contour, an eyebrow, and an eyelid. That the model processing device determines facial keypoints in the target head model may include: performing face detection on the target head model, to obtain detection keypoints corresponding to the target head model, performing keypoint annotation on the detection keypoints corresponding to the target head model by using reference facial keypoint distribution information, and determining annotated detection keypoints as the facial keypoints of the target head model. In some embodiments, face detection may be performed on the target head model by using a convolution neural network (CNN)-based face detection model. Specifically, the facial keypoints may be detected by using the face detection model. In this process, another neural network model that can detect the facial keypoints may alternatively be used. This is not limited in this embodiment of this application. Further, in some embodiments, the reference facial keypoint distribution information may be set according to a specific requirement, and may be distribution information of reference facial keypoints in a two-dimensional face image. The reference facial keypoints in the two-dimensional face image may be set according to a specific requirement. For example, a quantity and distribution positions of the reference facial keypoints in the two-dimensional face image may be set. Generally, the quantity of the reference facial keypoints in the two-dimensional face image may be set to 82, 76, or the like. For example, FIG. 4 is a schematic diagram of reference facial keypoints of a two-dimensional face image according to an embodiment of this application, which may include reference facial keypoints indicating facial features such as a nose tip, eyeballs, a facial contour, eyebrows, and eyelids. Further, the target head model on which face detection is performed may be obtained through rendering. If colorful textures or point coordinates are available, color rendering is used with natural lighting.

In an embodiment, that the model processing device performs deformation matching on the source head model according to the model feature of the target head model, to obtain the source head model subjected to deformation matching may include: determining a matching relationship between feature points in the source head model and feature points in the target head model according to positions of the feature points in the source head model and positions of the feature points in the target head model, where the feature points may include: one or two of vertices and facial keypoints in the corresponding models; and performing, according to the matching relationship and using the positions of the feature points in the target head model as reference positions, position adjustment on vertices forming the source head model, to obtain the source head model subjected to deformation matching, where distances between the positions of the feature points in the source head model subjected to deformation matching and the corresponding reference positions determined according to the matching relationship satisfy a proximity condition. In other words, the model processing device may adjustment the positions of the vertices forming the source head model according to the matching relationship, using a feature point position distance in the target head model as reference positions, and using reducing a distance between the positions of the feature points as a target, to obtain the source head model subjected to deformation matching, where the feature point position distance is a distance between the positions of the feature points in the source head model and reference positions corresponding to the corresponding feature points having a matching relationship in the target head model; and perform position adjustment on the vertices forming the source head model, so that the a distance between the positions of the feature points in the source head model subjected to deformation matching and the corresponding reference positions determined according to the matching relationship satisfies a proximity condition, where the proximity condition may be set according to a specific requirement.

Since the source head model and the target head model are two different models, a quantity of vertices in the source head model and positions of the vertices may be different from those of the target head model. The vertices in the source head model and the vertices in the target head model may have one or more of a plurality of correspondences such as one-to-one, one-to-many, many-to-one, and many-to-many correspondences. For example, when a quantity of vertices of an eyebrow region in the source head model exceeds a number of vertices of an eyebrow region in the target head model, a plurality of vertices of the eyebrow region in the source head model may correspond to one vertex of the eyebrow region in the target head model. Therefore, when the feature point is a vertex, the model processing device may determine a matching relationship between vertices in the source head model and vertices in the target head model according to positions of the vertices in the source head model and positions of the vertices in the target head model, and determining the matching relationship between the vertices means determining a correspondence between the vertices. When the feature point is a facial keypoint, the model processing device may determine a matching relationship between facial keypoints in the source head model and facial keypoints in the target head model according to positions of the facial keypoints in the source head model and positions of the facial keypoints in the target head model, and determining the matching relationship between the facial keypoints means determining a correspondence between the facial keypoints. For example, it is determined that a matching relationship exists between a facial keypoint indicating a nose tip in the source head model and a facial keypoint indicating a nose tip in the target head model. A process of determining the facial keypoints in the source head model is similar to the process of determining the facial keypoints in the target head model, and details are not described herein again.

Further, the model processing device may perform, according to the matching relationship and using the positions of the feature points in the target head model as reference positions, position adjustment on vertices forming the source head model, to obtain the source head model subjected to deformation matching. Distances between the positions of the feature points in the source head model subjected to deformation matching and the corresponding reference positions determined according to the matching relationship satisfy a proximity condition. For example, the proximity condition may be set as follows: an average value of distances between positions of feature points in the source head model subjected to deformation matching and corresponding reference positions determined according to the matching relationship is less than a first threshold. For another example, the proximity condition may be set as follows: a sum of distances between positions of feature points in the source head model subjected to deformation matching and corresponding reference positions determined according to the matching relationship is less than a second threshold. The first threshold and the second threshold may be set according to a specific requirement.

Further, in some embodiments, when the vertices and the facial keypoints are both selected as feature points, the model processing device may first perform position adjustment on vertices forming the source head model based on a matching relationship between the facial keypoints, to obtain an intermediate source head model, and further continue to perform position adjustment on vertices in the intermediate source head model based on a matching relationship between the vertices, to obtain a source head model subjected to deformation matching. During the position adjustment on the vertices forming the source head model based on the matching relationship between the facial keypoints, a distance between the facial keypoints may be used as a metric. In other words, positions of feature points (namely, facial keypoints) in the target head model are used as reference positions, and reducing a feature point position distance based on the facial keypoints is used as a deformation target. The process can be implemented by performing rigid translation, rotation, and scaling on the source head model. The process is expected to enable the intermediate source head model and the target head model to have consistent initial states, for example, consistent head orientations and sizes. When position adjustment continues to be performed on the vertices in the intermediate source head model based on a matching relationship between vertices, a distance between the vertices may be used as a metric. In other words, positions of feature points (namely, vertices) in the target head model are used as reference positions, and reducing a feature point position distance based on the vertices is used as a deformation target. Further, in some embodiments, a distance between keypoints and a distance between vertices may be jointly used as metrics. In other words, positions of feature points (namely, vertices and facial keypoints) in the target head model are used as reference positions, and reducing a feature point position distance when the feature points are the vertices and reducing a feature point position distance when the feature points are the facial keypoints are used as deformation targets. Further, in some embodiments, the distance between the vertices may be a distance between vertices having a matching relationship (namely, a feature point position distance based on the vertices), or may be a point-plane distance of the vertices.

S303: Determine, according to positions of feature points in the source head model subjected to deformation matching and positions of the corresponding feature points in the source head model, a deformation relationship between the source head model and the source head model subjected to deformation matching, the feature points including one or more of vertices and facial keypoints.

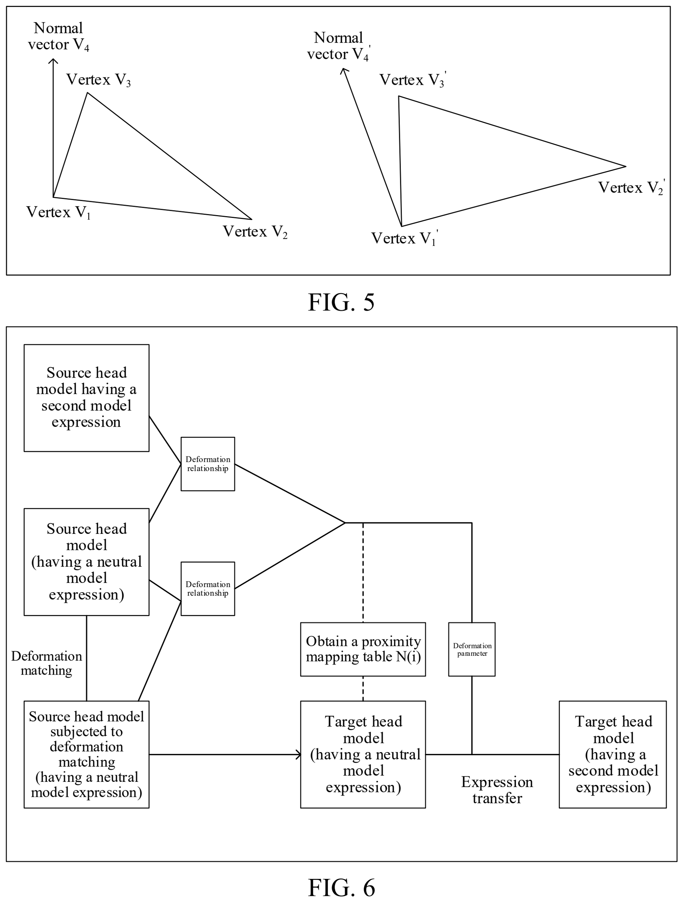

In an embodiment, the model processing device determines the deformation relationship between the source head model and the source head model subjected to deformation matching according to the positions of feature points in the source head model subjected to deformation matching and the positions of the corresponding feature points in the source head model, to determine vertex deformation relationship between the vertices in the source head model and the corresponding vertices in the source head model subjected to deformation matching, that is, a transformation matrix (which may also be referred to as a deformation field) from the vertices in the source head model to the corresponding vertices in the source head model subjected to deformation matching. A target triangle and vertices of the target triangle in the source head model are used as an example for description. The target triangle may be any triangle in the source head model. For example, FIG. 5 is a schematic diagram of position coordinates of target triangles in a source head model and in a source head model subjected to deformation matching according to an embodiment of this application. Position coordinates of three vertices of the target triangle in the source head model are respectively represented as: position coordinates $V_1$ of the first vertex, position coordinates $V_2$ of the second vertex, and position coordinates $V_3$ of the third vertex, and $V_4$ represents a normal vector of the target triangle. Position coordinates of the three vertices of the target triangle in the source head model subjected to deformation matching are respectively represented as: position coordinates $V_1'$ of the first vertex, position coordinates $V_2'$ of the second vertex, and position coordinates $V_3'$ of the third vertex, and $V_4'$ represents a normal vector of the target triangle. First, the model processing device may determine the normal vector of the target triangle according to positions of vertices of the target triangle in the source head model, and further determine a local coordinate system of the target triangle according to the positions of the vertices and the normal vector of the target triangle in the source head model.

The normal vector of the target triangle in the source head model may be expressed by the following formula 1.1:

$$V_4 = V_1 + (V_2 - V_1) \times (V_3 - V_1) \sqrt{|(V_2 - V_1) \times (V_3 - V_1)|} \ (1.1)$$

The local coordinate system of the target triangle in the source head model may be expressed by the following formula 1.2:

$$V = \begin{bmatrix} V_2 - V_1 & V_3 - V_1 & V_4 - V_1 \end{bmatrix} \ (1.2)$$

Further, the model processing device may determine the normal vector of the target triangle according to the positions of the vertices of the target triangle in the source head model subjected to deformation matching, and further determine a local coordinate system of the target triangle according to the positions of the vertices and the normal vector of the target triangle in the source head model subjected to deformation matching.

The normal vector of the target triangle in the source head model subjected to deformation matching may be expressed by the following formula 2.1:

$$V_4' = V_1' + (V_2' - V_1') \times (V_3' - V_1') \sqrt{|(V_2' - V_1') \times (V_3' - V_1')|} \ (2.1)$$

The local coordinate system of the target triangle in the source head model subjected to deformation matching may be expressed by the following formula 2.2:

$$V' = [V_2' - V_1' \quad V_3' - V_1' \quad V_4' - V_1'] \ (2.2)$$

A spatial affine transformation parameter Q and a translation parameter t are defined, and applied to the three vertices of the target triangle in the source head model, so that position coordinates of the three vertices of the target triangle in the source head model subjected to deformation matching are correspondingly obtained. A correspondence between position coordinates of the vertices of the target triangle in the source head model and the corresponding vertices of the target triangle in the source head model subjected to deformation matching may be expressed by the following formula 3:

$$Q * V_i + t = V_i' \ (3)$$

i represents an independent variable for the vertices of the target triangle, and i ∈ [1, 3].

Further, the model processing device may determine the affine transformation parameter according to the local coordinate system of the target triangle in the source head model and the local coordinate system of the target triangle in the source head model subjected to deformation matching. The translation parameter is determined according to the positions of the vertices of the target triangle in the source head model and the positions of the vertices of the target triangle in the source head model subjected to deformation matching. The affine transformation parameter Q may be expressed by the following formula 4, and the translation parameter t may be expressed by the following formula 5:

$$Q = V'V^{-1} \ (4)$$

$$t = [V_1' - V_1 \quad V_2' - V_2 \quad V_3' - V_3] \ (5)$$

Further, the model processing device may determine, according to the determined affine transformation parameter and the determined translation parameter, the vertex deformation relationship between the vertices of the target triangle in the source head model and the corresponding vertices in the source head model subjected to deformation matching, that is, the transformation matrix from the vertices of the target triangle in the source head model to the corresponding vertices in the source head model subjected to deformation matching. When the target triangle is an $i^{th}$ triangle in the plurality of triangles in the source head model, a transformation matrix from vertices of the target triangle in the source head model to the corresponding vertices in the source head model subjected to deformation matching may be expressed by the following formula 6. The transformation matrix includes a vertex deformation relationship between three vertices in the $i^{th}$ triangle:

$$T_i'' = [Q_i, t_i] \ (6)$$

$Q_i$ represents an affine transformation parameter corresponding to the $i^{th}$ triangle determined according to a local coordinate system of the $i^{th}$ triangle in the source head model and a local coordinate system of the $i^{th}$ triangle in the source head model subjected to deformation matching, $t_i$ represents a translation parameter corresponding to the $i^{th}$ triangle determined according to positions of vertices of the $i^{th}$ triangle in the source head model and positions of vertices of the $i^{th}$ triangle in the source head model subjected to deformation matching, and $T_i''$ represents a transformation matrix from vertices of the $i^{th}$ triangle in the source head model to the corresponding vertices in the source head model subjected to deformation matching, namely, a transformation matrix from the $i^{th}$ triangle in the source head model to the $i^{th}$ triangle in the source head model subjected to deformation matching.

S304: Determine the deformation parameter according to the deformation relationship between the source head model and the source head model subjected to deformation matching, and the deformation relationship from the first model expression to the second model expression in the source head model.

The first model expression in the source head model is determined according to the neutral feature data of the source head model, and the second model expression in the source head model is determined according to expression feature data indicated by the expression movement instruction in the plurality of pieces of expression feature data. In other words, the first model expression may be obtained through rendering according to positions of vertices included in the neutral feature data. The first model expression may be, for example, a face without a common expression. The source head model may be correspondingly provided with a plurality of pieces of expression feature data having a common expression, for example, smile expression feature data and grin expression feature data. Expression feature data of a common expression can be determined from the plurality of pieces of expression feature data based on the expression movement instruction. The plurality of pieces of expression feature data can be rendered to obtain corresponding expressions. For example, if the expression movement instruction indicates a smile instruction, the second model expression is a smile expression.

Further, the deformation relationship from the first model expression to the second model expression in the source head model may be determined according to the positions of the feature points in the source head model having the second model expression and the positions of the corresponding feature points in the source head model having the first model expression, specifically, to determine a vertex deformation relationship between the vertices in the source head model having the first model expression and the corresponding vertices in the source head model having the second model expression, namely, a transformation matrix (which may also be referred to as a deformation field) from the vertices in the source head model having the first model expression to the corresponding vertices in the source head model having the second model expression. The process is similar to the foregoing process of determining the deformation relationship between the source head model and the source head model subjected to deformation matching, and details are not described herein again.

In an embodiment, the deformation parameter may include vertex deformation parameters of vertices in the target head model. Determining a vertex deformation parameter of a target vertex in the target head model is used as an example. The target vertex may be any vertex in the target head model. In this case, that the model processing device determines a deformation parameter according to the deformation relationship between the source head model and the source head model subjected to deformation matching and the deformation relationship from the first model expression to the second model expression in the source head model may include: determining, according to the deformation relationship between the source head model and the source head model subjected to deformation matching, a first vertex deformation relationship between reference vertices in the source head model and the corresponding vertices in the source head model subjected to deformation matching; determining, according to the deformation relationship from the first model expression to the second model expression in the source head model, a second vertex deformation relationship between reference vertices in the source head model having the first model expression and the corresponding vertices in the source head model having the second model expression; and determining a vertex deformation parameter of a target vertex corresponding to the reference vertices in the target head model according to the first vertex deformation relationship of the reference vertices and the second vertex deformation relationship of the reference vertices. If the target vertex is an $i^{th}$ vertex in the target head model, where $i \in [1$, a quantity of vertices in the target head model], a vertex deformation parameter of the target vertex in the target head model may be expressed by the following formulas 7.1 and 7.2:

$$T_i = \sum_{j \in N(i)} w_{i,j}\, T_j'\, T_j'' \quad (7.1)$$

$$\sum_{i \in N(i)} w_{i,j} = 1 \quad (7.2)$$

*N(i)* represents a reference triangle index set formed by indexes of reference triangles corresponding to the target vertex (namely, the $i^{th}$ vertex) in the target head model in the source head model. The reference vertices corresponding to the target vertex (namely, the $i^{th}$ vertex) in the source head model are vertices of the reference triangles. Further, in some embodiments, the reference triangle may be the nearest triangle in the source head model corresponding to the $i^{th}$ vertex in the target head model. $T_j''$ represents a transformation matrix from vertices of a $j^{th}$ triangle in the source head model to the corresponding vertices in the source head model subjected to deformation matching, namely, a transformation matrix from the $j^{th}$ triangle in the source head model to the $j^{th}$ triangle in the source head model subjected to deformation matching, and $T_j'$ represents a transformation matrix from vertices of a $j^{th}$ triangle in the source head model having the first model expression to the corresponding vertices in the source head model having the second model expression, namely, a transformation matrix from a $j^{th}$ triangle in the source head model having the first model expression to a $j^{th}$ triangle in the source head model having the second model expression. $w_{i,j}$ represents that an $i^{th}$ vertex in the target head model corresponds to a proximity weight of a $j^{th}$ triangular face in the source head model, and may be set according to a specific requirement.

S305: Perform expression transfer on the target head model according to the deformation parameter, to obtain a target head model having the second model expression.

In a feasible implementation, an operation of performing, by the model processing device, expression transfer on the target head model according to the deformation parameter, to obtain the target head model having the second model expression may include: adjusting, according to the vertex deformation parameters of the vertices in the target head model, positions of corresponding vertices in the target head model having the first model expression, to obtain the target head model having the second model expression. An example in which the target vertex in the target head model (having the first model expression) is the $i^{th}$ vertex is used, and a process of adjusting the position of the target vertex according to the vertex deformation parameter of the target vertex in the target head model may be expressed by the following formula 8:

$$v_i^{**} = T_i v_i^* \quad (8)$$

$v_i^*$ represents a position of a target vertex (namely, an $i^{th}$ vertex) in the target head model, and $v_i^{**}$ represents a position of an adjusted target vertex.

FIG. 6 is a schematic diagram of performing expression transfer on a target head model according to an embodiment of this application. After obtaining the source head model and the target head model, the model processing device may perform deformation matching on the source head model (having the first model expression, that is, having the neutral model expression) according to a model feature of the target head model (having the first model expression, that is, having the neutral model expression), to obtain the source head model subjected to deformation matching, where the source head model subjected to deformation matching approximates the target head model. Further, the model processing device may determine a deformation relationship between the source head model and the source head model subjected to deformation matching and a deformation relationship from the first model expression to the second model expression in the source head model, determine a deformation parameter according to the determined two deformation relationships, and perform expression transfer on the target head model according to the deformation parameter, to obtain the target head model having the second model expression, thereby implementing the second model expression of the target head model, that is, implementing transfer of the second model expression from the source head model to the target head model. Further, in the source head model, indexes of reference triangles corresponding to the target vertex in the target head model may be represented by a proximity mapping table corresponding to the target vertex. Based on this, in the process of determining the vertex deformation parameter of the vertices in the target head model, the model processing device may obtain a proximity mapping table corresponding to the corresponding vertices, determine the vertex deformation parameter of the corresponding vertices based on the proximity mapping table and the two determined deformation relationships, and adjust the corresponding vertices based on the vertex deformation parameter.

In this embodiment of this application, the second model expression can be automatically transferred from the source head model to the target head model. In other words, the second model expression can be automatically generated for the target head model. The second model expression in the source head model can be reused in different head models, further improving the efficiency of generating model expressions by different head models, and reducing human resource consumption. Further, in the process of determining the deformation relationship, the deformation relationship between the source head model and the source head model subjected to deformation matching is determined according to the positions of the feature points in the source head model subjected to deformation matching and the positions of the corresponding feature points in the source head model. Further, the deformation parameter may be determined according to the deformation relationship between the source head model and the source head model subjected to deformation matching and the deformation relationship from the first model expression to the second model expression in the source head model. The deformation relationship and the deformation parameter are determined by using the feature points in the model as analyzed objects, improving the accuracy and efficiency of model deformation. Determining a complete expression deformation parameter according to the deformation relationship from the first model expression to the second model expression in the source head model may cause the determined deformation parameter to mismatch the target head model since the source head model and the target head model have different facial features, causing a poor effect of the second model expression transferred to the target head model. In this solution, the source head model subjected to deformation matching approximates the target head model, and therefore, deformation of the target head model may be controlled according to a deformation relationship corresponding to an expression change in the source head model. In addition, by implementing expression transformation on the target head model based on the deformation relationship of the feature points rather than a deformation relationship of pixel points, the efficiency of matching between the determined deformation parameter and the target head model can be improved, and an effect of expression transfer based on the deformation parameter is further improved, that is, an effect of the second model expression transferred to the target head model is improved.

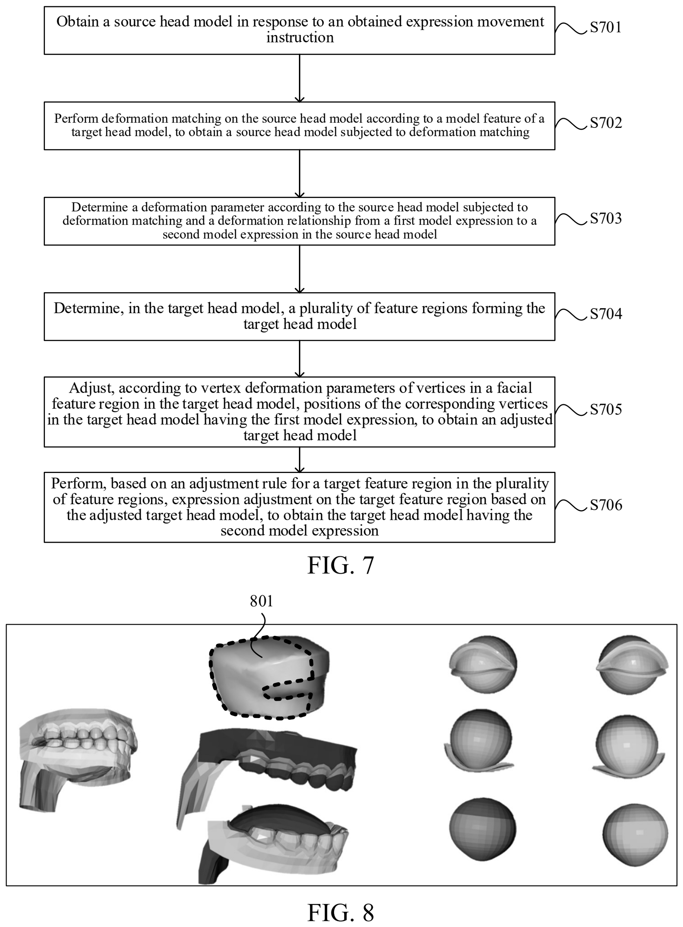

Based on the related embodiments of the foregoing model processing method, an embodiment of this application provides another model processing method. FIG. 7 is a schematic flowchart of another model processing method according to an embodiment of this application. The model processing method shown in FIG. 7 may be performed by the model processing device mentioned above. The model processing method shown in FIG. 7 may include the following operations.

S701: Obtain a source head model in response to an obtained expression movement instruction.

EP 4 645 227 A1

The source head model is configured with neutral feature data, and a plurality of pieces of expression feature data relative to the neutral feature data.

S702: Perform deformation matching on the source head model according to a model feature of a target head model, to obtain a source head model subjected to deformation matching.

S703: Determine a deformation parameter according to the source head model subjected to deformation matching and a deformation relationship from a first model expression to a second model expression in the source head model.

The first model expression in the source head model is determined according to the neutral feature data of the source head model, and the second model expression in the source head model is determined according to expression feature data indicated by the expression movement instruction in the plurality of pieces of expression feature data. The deformation parameter includes vertex deformation parameters of vertices of a facial feature region in the target head model. A process related to operation S701 to operation S703 is similar to a process related to operation S201 to operation S203 and a process related to operation S301 to operation S304, and details are not described herein again.

S704: Determine, in the target head model, a plurality of feature regions forming the target head model.

In an embodiment, that the model processing device determines, in the target head model, a plurality of feature regions forming the target head model may include: determining connected regions (communicated regions) of the target head model in the target head model, and determining coinciding boundaries between the connected regions; and performing region merging on the connected regions according to determined lengths of the coinciding boundaries, and determining a plurality of connected regions obtained through the region merging as the plurality of feature regions. In some embodiments, when performing region merging on the connected regions according to the determined lengths of the coinciding boundaries, the model processing device may perform region merging on the corresponding connected regions in a case that the determined lengths of the coinciding boundaries are greater than a length threshold, or perform region merging on the corresponding connected regions in a case that a proportion of the determined lengths of the coinciding boundaries to a length of a boundary of the corresponding connected regions is greater than a coincidence proportion threshold. The length threshold and the coincidence proportion threshold may be set according to a specific requirement. FIG. 8 is a schematic diagram of feature regions according to an embodiment of this application. For example, a feature region may be indicated by label 801.

S705: Adjust, according to vertex deformation parameters of vertices in a facial feature region in the target head model, positions of the corresponding vertices in the target head model having the first model expression, to obtain an adjusted target head model.

The facial feature region is a feature region having a largest surface area in the plurality of feature regions; and the feature region having the largest surface area in the plurality of feature regions is determined as the facial feature region because connected regions formed by the face and the head have a largest actual surface area rather than a largest number of vertices. A related process in which the model processing device adjusts, according to the vertex deformation parameters of the vertices in the facial feature region in the target head model, the positions of the corresponding vertices in the target head model having the first model expression is similar to the related process in operation S305 of adjusting, according to the vertex deformation parameters of the vertices in the target head model, the positions of the corresponding vertices in the target head model having the first model expression. Details are not described herein again. The process is a face sculpting process, and the positions of the vertices in the facial feature region in the target head model are changeable.

S706: Perform, based on an adjustment rule for a target feature region in the plurality of feature regions, expression adjustment on the target feature region based on the adjusted target head model, to obtain the target head model having the second model expression.

In an embodiment, the target feature region may be any of the plurality of feature regions other than the facial feature region, for example, may be a feature region indicating an eyebrow, a feature region indicating an eyelash, or a feature region indicating a tongue. That the model processing device performs, based on the adjustment rule for the target feature region in the plurality of feature regions, expression adjustment on the target feature region may include: determining a linked feature region corresponding to the target feature region from the plurality of feature regions; and performing follow-up adjustment on the target feature region according to adjustment of the linked feature region based on an instruction of the adjustment rule for the target feature region. In other words, expression adjustment may be performed on the target feature region, based on the adjustment rule for the target feature region, following the adjustment of the linked feature region.

The linked feature region corresponding to the target feature region may be a feature region that may be configured for guiding the target feature region to perform expression adjustment in the plurality of feature regions. Generally, the facial feature region may be determined as the linked feature region corresponding to the target feature region. Further, that the model processing device performs follow-up adjustment on the target feature region according to the adjustment of the linked feature region based on the instruction of the adjustment rule for the target feature region may include: if an overlapping area between the target feature region and the linked feature region is less than an area threshold, adjusting positions of vertices in the target feature region according to a rigid adjustment method, following the adjustment of positions of vertices in the linked feature region; or if the overlapping area between the target feature region and the linked feature region is greater than or equal to the area threshold, adjusting the positions of the vertices in the target feature region according to a Laplace's method, following the adjustment of the positions of the vertices in the linked feature region. The area threshold may be set according to a specific requirement, and the rigid adjustment method includes rigid rotation and translation. For example, if the target feature region is a feature region indicating an eyebrow, a linked feature region corresponding to the feature region indicating the eyebrow is a facial feature region, and an overlapping area between the feature region indicating the eyebrow and the facial feature region is less than an area threshold, positions of vertices in the feature region indicating the eyebrow are adjusted according to the rigid adjustment method, following the adjustment of positions of vertices in the facial feature region. After the target feature region in which expression transformation needs to be completed is determined, in this application, a feature region linked to the target feature region is further correspondingly determined. In this way, when expression transformation adjustment is performed on the target feature region, the linked feature region moves accordingly, making the expression transformation more natural.

In a feasible implementation, in when the positions of the vertices in the target feature region are adjusted according to the rigid adjustment method, following the adjustment of the positions of the vertices in the linked feature region, a rigid adjustment parameter may be determined according to positions of the vertices before the linked feature region is adjusted and positions of the vertices after the linked feature region is adjusted, and rigid adjustment is performed on the positions of the vertices in the target feature region based on the rigid adjustment parameter. When the linked feature region is a facial feature region, the positions of the vertices before the linked feature region is adjusted are the positions of the vertices in the facial feature region in the target head model, and the positions of the vertices after the linked feature region is adjusted are positions of vertices in the facial feature region in the adjusted target head model. When the rigid adjustment parameter is determined according to the positions of the vertices before the linked feature region is adjusted and the positions of the vertices after the linked feature region is adjusted, according to a first point cloud matrix formed by the positions of the vertices before the linked feature region is adjusted and a second point cloud matrix formed by the positions of the vertices after the linked feature region is adjusted, center points of the first point cloud matrix and the second point cloud matrix may be determined; and a decentralized first point cloud matrix is determined according to the first point cloud matrix and the corresponding center point, a decentralized second point cloud matrix is determined according to the second point cloud matrix and the corresponding center point; and singular value decomposition (SVD) may be further performed on the decentralized first point cloud matrix and the decentralized second point cloud matrix, to obtain a rotation matrix and a translation parameter. The rotation matrix and the translation parameter obtained through decomposition form the rigid adjustment parameter.

In some embodiments, an example in which the linked feature region is a facial feature region is used. The facial feature region before adjustment may be considered as a mesh component corresponding to a neutral model expression, and the facial feature region after adjustment may be considered as a mesh component corresponding to a non-neutral model expression. The first point cloud matrix formed by the positions of the vertices before the linked feature region is adjusted may be expressed by the following formula 9.1, and the second point cloud matrix formed by the positions of the vertices after the linked feature region is adjusted may be expressed by the following formula 9.2. If vertices in the linked feature region are counted from 0, $[x_0 \, y_0 \, z_0]$ represents position coordinates (that is, x-axis, y-axis, and z-axis coordinates) of a vertex with a count of 0 before the linked feature region is adjusted, and $[x_n \, y_n \, z_n]$ represents position coordinates (that is, x-axis, y-axis, and z-axis coordinates) of a vertex with a count of n before the linked feature region is adjusted. Since the vertices in the linked feature region are counted from 0, n is a value obtained by subtracting 1 from a quantity of vertices in the linked feature region, that is, n+1 represents the quantity of vertices in the linked feature region. $[x'_0 \, y'_0 \, z'_0]$ represents position coordinates (that is, x-axis, y-axis, and z-axis coordinates) of a vertex with a count of 0 after the linked feature region is adjusted; and $[x'_n \, y'_n \, z'_n]$ represents position coordinates (that is, x-axis, y-axis, and z-axis coordinates) of a vertex with a count of n after the linked feature region is adjusted.

$$P_{src} = \begin{bmatrix} x_0 & y_0 & z_0 \\ \vdots & \vdots & \vdots \\ x_n & y_n & z_n \end{bmatrix} \quad (9.1)$$

$$P_{tgt} = \begin{bmatrix} x'_0 & y'_0 & z'_0 \\ \vdots & \vdots & \vdots \\ x'_n & y'_n & z'_n \end{bmatrix} \quad (9.2)$$

The center point of the first point cloud matrix may be expressed by the following formula 9.3, and the center point of the second point cloud matrix may be expressed by the following formula 9.4:

$$\bar{P}_{src} = \frac{1}{n+1}\left[\sum_{i=0}^{n} x_i, \sum_{i=0}^{n} y_n, \sum_{i=0}^{n} z_n\right] \quad (9.3)$$

$$\bar{P}_{tgt} = \frac{1}{n+1}\left[\sum_{i=0}^{n} x_i', \sum_{i=0}^{n} y_n', \sum_{i=0}^{n} z_n'\right] \quad (9.4)$$

The decentralized first point cloud matrix may be expressed by the following formula 9.5, and the decentralized second point cloud matrix may be expressed by the following formula 9.6:

$$P_{src}' = P_{src} - \bar{P}_{src} \quad (9.5)$$

$$P_{tgt}' = P_{tgt} - \bar{P}_{tgt} \quad (9.6)$$

A correspondence obtained by performing singular value decomposition on the decentralized first point cloud matrix and the decentralized second point cloud matrix may be expressed by the following formula 9.7, the rotation matrix (R) obtained through decomposition may be expressed by the following formula 9.8, and the translation parameter (t) may be expressed by the following formula 9.9:

$$\left(P_{tgt}'\right)^{T} P_{src}' = U^{T} S V \quad (9.7)$$

$$R = U^{T} \cdot V \quad (9.8)$$

$$t = -R\,\bar{p}_{src}^{T} + \bar{p}_{tgt}^{T} \quad (9.9)$$

U represents a left unitary matrix, S represents a non-negative real diagonal matrix, and V represents a right unitary matrix.

In an embodiment, the linked feature region corresponding to the target feature region may be a feature region that may be configured for guiding the target feature region to perform expression adjustment in the plurality of feature regions. Generally, the facial feature region may be determined as the linked feature region corresponding to the target feature region. Further, when the target feature region belongs to an eyeball accessory region, the linked feature region corresponding to the target feature region may alternatively be the eyeball region determined in the plurality of feature regions (that is, the plurality of feature regions may include the eyeball region). Therefore, the model processing device needs to determine the eyeball region and the eyeball accessory region from the plurality of feature regions. The eyeball accessory region is a feature region indicating an eyeball accessory. The eyeball accessory may include structural components related to the eyeball, such as eyeball contents, an eyelid, an eyelash, and an eyebrow.

A manner in which the model processing device determines the eyeball region from the plurality of feature regions includes: determining center points and spherical similarities of the feature regions; and determining the eyeball region from the plurality of feature regions according to distances between the center points of the feature regions and eyeball keypoints in facial keypoints of the adjusted target head model and degrees of resembling a sphere indicated by the spherical similarities of the feature regions. The spherical similarity (circularity) is also referred to as sphericity, and can measure a degree to which an object resembles a sphere, and the spherical similarity of a feature region is configured for indicating a degree to which the corresponding feature region resembles a sphere.

That the model processing device determines the center points and the spherical similarities of the feature regions may include: determining, for a currently traversed feature region in the feature regions, a center point of the currently traversed feature region according to positions of vertices in the currently traversed feature region; determining, according to the positions of the vertices in the currently traversed feature region and a position of the center point, radii of distances from the vertices in the currently traversed feature region to the center point, and an average radius corresponding to the vertices in the currently traversed feature region; and determining the spherical similarity of the currently traversed feature region according to differences between the radii of distances from the vertices in the currently traversed feature region to the center points and the average radius. Further, an average value of absolute values of differences between the radii of distances from the vertices in the currently traversed feature region to the corresponding center points and the average radius may be used as the spherical similarity of the currently traversed feature region.

When determining the center point of the currently traversed feature region according to the positions of the vertices in the currently traversed feature region, the model processing device may perform averaging processing on the positions of the vertices in the currently traversed feature region, and determine a position obtained through averaging processing as a position of the center point of the currently traversed feature region. The position of the center point of the currently traversed feature region may be expressed by the following formula 10.1, formula 10.2, and formula 10.3, where N represents a quantity of vertices in the currently traversed feature region, and i is an independent variable. If the vertices in the currently traversed feature region are counted from 0, $x_i$ represents an x-axis coordinate in a position of a vertex with a count of i in the currently traversed feature region, $y_i$ represents a y-axis coordinate in the position of the vertex with a count of i in the currently traversed feature region, $z_i$ represents a z-axis coordinate of the position of the vertex with a count of i in the currently traversed feature region, and $\overline{x}$, $\overline{y}$, and $\overline{z}$ respectively represent x-axis, y-axis, and z-axis coordinates of the position of the center point of the currently traversed feature region:

$$\overline{x} = \frac{1}{N}\sum_{i=0}^{N-1} x_i \quad (10.1)$$

$$\overline{y} = \frac{1}{N}\sum_{i=0}^{N-1} y_i \quad (10.2)$$

$$\overline{z} = \frac{1}{N}\sum_{i=0}^{N-1} z_i \quad (10.3)$$

When the model processing device determines, according to the positions of the vertices in the currently traversed feature region and the position of the center point, the radii of distances from the vertices in the currently traversed feature region to the center point, and the average radius corresponding to the vertices in the currently traversed feature region, a radius of a distance from any vertex in the currently traversed feature region to the corresponding center point may be a distance between the any vertex and the corresponding center point, and the average radius corresponding to the vertices in the currently traversed feature region is obtained by performing averaging processing on the radii of distances from the vertices in the currently traversed feature region to the corresponding center point. A radius of a distance from a vertex in the currently traversed feature region to the corresponding center point may be expressed by the following formula 10.4, and the average radius corresponding to the vertices in the currently traversed feature region may be expressed by the following formula 10.5. $R_i$ represents a radius of a distance from the vertex with a count of i in the currently traversed feature region to the corresponding center point, and $\overline{R}$ represents the average radius corresponding to the vertices in the currently traversed feature region.

$$R_i = \sqrt{(x_i - \overline{x})^2 + (y_i - \overline{y})^2 + (z_i - \overline{z})^2} \quad (10.4)$$

$$\overline{R} = \frac{1}{N}\sum_{i=0}^{N-1} R_i \quad (10.5)$$

The model processing device may determine the spherical similarity of the currently traversed feature region according to the difference between the radii of distances from the vertices in the currently traversed feature region to the corresponding center point and the average radius. For example, an average value of absolute values of differences between the radii of distances from the vertices in the currently traversed feature region to the corresponding center point and the average radius may be used as the spherical similarity of the currently traversed feature region. The spherical similarity of the currently traversed feature region may be expressed by the following formula 10.6. Circularity represents the spherical similarity:

$$Circularity = \frac{1}{N}\sum_{i=0}^{N-1} \lVert R_i - \overline{R} \rVert \quad (10.6)$$

It can be known from formula 10.6 that the spherical similarity of a feature region is negatively correlated with a degree to which the corresponding feature region resembles a sphere. Based on this, that the model processing device determines the eyeball region from the plurality of feature regions according to distances between the center points of the feature regions and eyeball keypoints in facial keypoints of the adjusted target head model and degrees of resembling a sphere indicated by the spherical similarities of the feature regions may include: determining the feature regions with the spherical similarity less than a similarity threshold in the feature regions as candidate eyeball regions; determining the distances between the center points of the candidate eyeball regions and the eyeball keypoints in the facial keypoints of the adjusted target head model; and determining the candidate eyeball region indicated by a smallest distance in the candidate eyeball regions as the eyeball region. The similarity threshold may be set according to a specific requirement, and the eyeball keypoint is a facial keypoint that may indicate an eyeball. Since the eyeball may include a left eyeball and a right eyeball, the eyeball keypoints may include left eyeball keypoints and right eyeball keypoints. Based on this, in the process of determining the distances between the center points of the candidate eyeball regions and the eyeball keypoints in the facial keypoints of the adjusted target head model, distances between the center points of the candidate eyeball regions and the left eyeball keypoints as well as the right eyeball keypoints may be respectively determined. Further, in the candidate eyeball regions, the candidate eyeball region that shows a smallest distance to the left eyeball keypoints is determined as a left eyeball region, and the candidate eyeball region that shows a smallest distance to the right eyeball keypoints is determined as a right eyeball region. In other words, the left eyeball region and the right eyeball region may be determined according to similarities between the center points of the candidate eyeball regions and the left eyeball keypoints as well as the right eyeball keypoints. Since an eyeball in three-dimensional model modeling is usually a plurality of concentric spherical shells, configured for representing components such as an iris, a pupil, a sclera, and a cornea forming the eyeball, the determined left eyeball region and right eyeball region may include a plurality of concentric spherical shells (also referred to as multilayer eyeball components). The eyeball region is determined in the foregoing manner because when the spherical similarity is less than the similarity threshold, or the center point of the feature region is excessively far from an eyeball space center with a highest confidence, the feature region is not considered as the eyeball region. An eye region and an eyeball position in the model can be more accurately determined based on eye features in the foregoing calculation manner, so that in some expression transformations involving the eyeball, better control over the movement of feature points can be achieved, allowing for a more natural representation of eye-related expressions in the target head model.

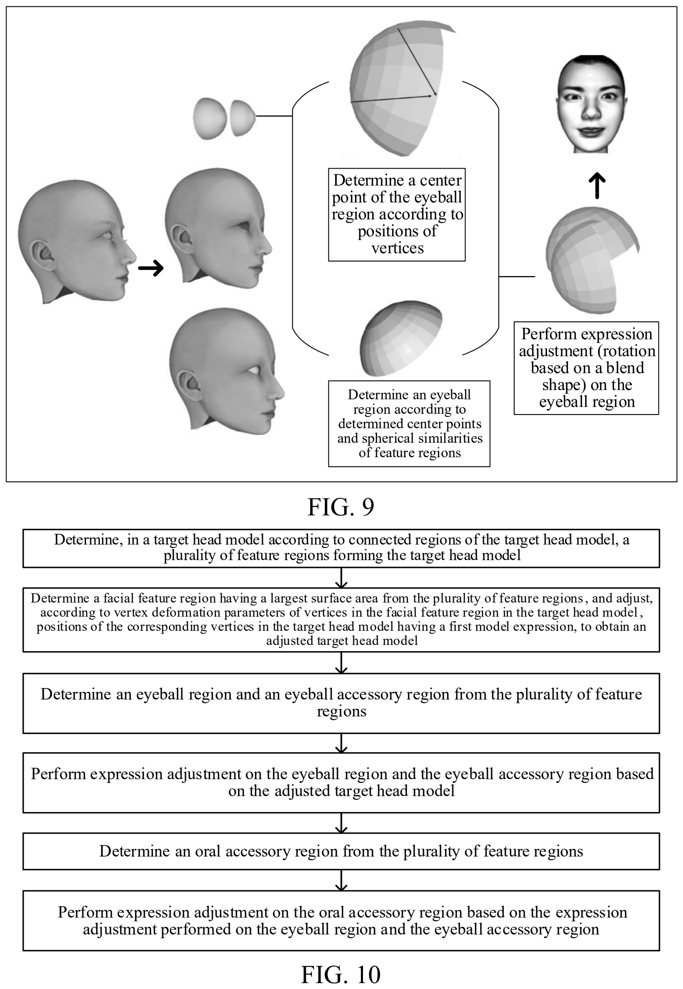

The linked feature region corresponding to the eyeball accessory region may be an eyeball region, that is, the eyeball accessory region may be adjusted following the adjustment of the eyeball region. Therefore, after determining the eyeball region from the plurality of feature regions, the model processing device may further perform expression adjustment on the eyeball region. Usually, the expression adjustment of the eyeball region mainly involves rotation of the eyeball. According to vertex deformation parameters of vertices in the eyeball region in the target head model, positions of the corresponding vertices in the adjusted target head model may be adjusted, that is, rotated based on the blend shape. FIG. 9 is a schematic diagram of localization and rotation of an eyeball region according to an embodiment of this application. The model processing device may determine, in the target head model, a plurality of feature regions forming the target head model and determine the eyeball region from the plurality of feature regions; and in the process of determining the eyeball region from the plurality of feature regions, may determine the eyeball region (that is, determine the multilayer eyeball components forming the eyeball region) according to center points and spherical similarities of the determined feature regions. The center point of the eyeball region is a center point of the multilayer eyeball components, and is determined according to positions of vertices in the multilayer eyeball components. Since the multilayer eyeball components are concentric spherical shells, the center point of the eyeball region may also be determined according to positions of vertices in any eyeball component. Further, the model processing device may perform expression adjustment on the eyeball region, for example, perform rotation based on the blend shape.

In an embodiment, after the eyeball region and the eyeball accessory region are determined from the plurality of feature regions, the linked feature region corresponding to the target feature region (namely, the eyeball accessory region) may be determined from the plurality of feature regions. In other words, if the target feature region belongs to the eyeball accessory region, a position relationship between the target feature region and the eyeball region in the plurality of feature regions is determined; and the linked feature region is determined from the eyeball region and the facial feature region according to the position relationship between the target feature region and the eyeball region. If a distance between the target feature region and the eyeball region is less than a distance threshold, the eyeball region is determined as the linked feature region; otherwise, the facial feature region is determined as the linked feature region. The eyeball accessory region is a feature region indicating an eyeball accessory. The eyeball accessory may include structural components related to the eyeball, such as eyeball contents, an eyelid, an eyelash, and an eyebrow. When determining the linked feature region from the eyeball region and the facial feature region according to the position relationship between the target feature region and the eyeball region, the model processing device may determine the linked feature region based on the distance between the target feature region and the eyeball region. If the distance between the target feature region and the eyeball region is less than the distance threshold, the eyeball region is determined as the linked feature region; otherwise, the facial feature region is determined as the linked feature region. The distance threshold may be set according to a specific requirement. For example, the eyeball region may be determined as a linked feature region corresponding to an eyeball accessory region indicating eyeball contents, and the facial feature region may be determined as a linked feature region corresponding to an eyeball accessory region indicating an eyelid, an eyeball accessory region indicating an eyelash, and an eyeball accessory region indicating an eyebrow.

Further, in some embodiments, when determining the linked feature region from the eyeball region and the facial feature region according to the position relationship between the target feature region and the eyeball region, the model processing device may further determine type of eyeball accessory regions according to the position relationship between the target feature region (namely, the eyeball accessory region) and the eyeball region, and determine the linked feature region from the eyeball region and the facial feature region according to the types of the eyeball accessory regions. For example, among the eyeball accessory regions, the eyeball accessory region overlapping with the eyeball region may be determined as the eyeball accessory region indicating eyeball contents, and among the eyeball accessory regions, the eyeball accessory region located above the eyeball region and close to facial keypoints indicating an eyebrow in the facial keypoints may be determined as the eyeball accessory region indicating the eyebrow. Further, in the process of determining the linked feature region from the eyeball region and the facial feature region according to the types of the eyeball accessory regions, the eyeball region may be determined as the linked feature region corresponding to the eyeball accessory region indicating the eyeball contents, and the facial feature region may be determined as the linked feature region corresponding to the eyeball accessory region indicating the eyelid, the eyeball accessory region indicating the eyelash, and the eyeball accessory region indicating the eyebrow.

In an embodiment, the model processing device may further determine an oral region from the plurality of feature regions, and further determine an oral accessory region. The oral accessory region is a feature region indicating an oral accessory zone, and the oral accessory may include structural components related to an oral cavity, such as upper and lower jaws, teeth, and a tongue. After determining the oral accessory region, the model processing device may determine a feature region indicating upper and lower jaws as the linked feature region corresponding to the oral accessory region, so that the oral accessory region may be adjusted following the adjustment of the feature region indicating the upper and lower jaws, for example, may be subjected to rigid adjustment following the adjustment of the feature region indicating the upper and lower jaws. In the oral accessory region, an oral accessory region indicating a tongue may also be correspondingly adjusted according to vertex deformation parameters of vertices in the oral accessory region indicating the tongue in the target head model.

FIG. 10 is a schematic diagram of performing expression transfer on a target head model according to an embodiment of this application. According to connected regions of the target head model, a plurality of feature regions forming the target head model are determined in the target head model. A facial feature region having a largest surface area is determined from the plurality of feature regions, and according to vertex deformation parameters of vertices in the facial feature region in the target head model, positions of the corresponding vertices in the target head model having the first model expression are adjusted, to obtain an adjusted target head model. An eyeball region and an eyeball accessory region are determined from the plurality of feature regions. Expression adjustment is performed on the eyeball region and the eyeball accessory region based on the adjusted target head model. For example, an eyeball accessory region indicating an eyelash is adjusted following the adjustment of the facial feature region. An oral accessory region is determined from the plurality of feature regions. Expression adjustment is performed on the oral accessory region based on the expression adjustment performed on the eyeball region and the eyeball accessory region. For example, an oral accessory region indicating upper and lower jaws and an oral accessory region indicating teeth are adjusted following the adjustment of a feature region indicating the upper and lower jaws.

In an embodiment, if the target feature region belongs to an eyelid region, the first model expression in the source head model includes an expression indicating that the source head model is in an open-eye state, and the second model expression in the source head model includes an expression indicating that the source head model is in a closed-eye state, that the model processing device performs expression adjustment on the target feature region based on the adjustment rule for the target feature region in the plurality of feature regions may include: determining a lower eyelid boundary and an upper eyelid boundary in the eyelid region in the adjusted target head model; and performing collision deformation on the eyelid region according to a size parameter and a position of the eyeball region in the plurality of feature regions and based on a Laplace's equation, to obtain a deformed eyelid region. The process enables the upper eyelid boundary to coincide with the lower eyelid boundary in a deformed eyelid region as closely as possible. Since the eyes include a left eye and a right eye, the adjustment of the eyelid region in the foregoing process may be adjustment of an eyelid region corresponding to the left eye, adjustment of an eyelid region corresponding to the right eye, or adjustment of eyelid regions corresponding to both eyes. For example, when the second model expression in the source head model indicates that the source head model is in a closed-eye state of the left eye, the eyelid region corresponding to the left eye is correspondingly adjusted; when the second model expression in the source head model indicates that the source head model is in a closed-eye state of the right eye, the eyelid region corresponding to the right eye is correspondingly adjusted; and when the second model expression in the source head model indicates that the source head model is in a closed-eye state of both eyes, the eyelid regions corresponding to both eyes are correspondingly adjusted.

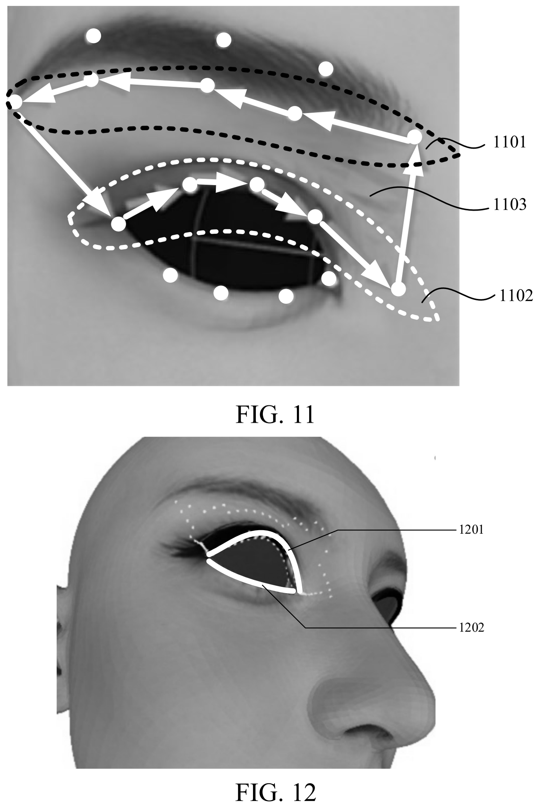

In an exemplary implementation, the eyelid region may be determined from the plurality of feature regions, or may be determined according to distribution positions of the facial keypoints in the target head model. During specific implementation, facial keypoints indicating a lower part of the eyebrow and an upper part of the eye in the target head model may be connected with a shortest distance, and the connected region is determined as the eyelid region. FIG. 11 is a schematic diagram of determining an eyelid region according to an embodiment of this application. Facial keypoints indicating the lower part of the eyebrow may be indicated by label 1101, facial keypoints indicating the upper part of the eye may be indicated by label 1102, and the determined eyelid region may be indicated by label 1103. FIG. 12 is a schematic diagram of a lower eyelid boundary and an upper eyelid boundary according to an embodiment of this application. The upper eyelid boundary may be indicated by label 1201, and the lower eyelid boundary may be indicated by label 1202.

In the process of performing collision deformation on the eyelid region according to a size parameter and a position of the eyeball region in the plurality of feature regions and based on a Laplace's equation, to obtain a deformed eyelid region, the model processing device uses the size parameter and the position of the eyeball region as newly added constraints in the Laplace's equation, and solves the Laplace's equation, allowing for resolving the collision between the eyelid vertices and the eyeball while maintaining the consistency of mesh surface normal vectors and original vertex positions as much as possible, thereby reducing the possibility of eyeball penetration caused during the collision deformation on the eyelid region. In addition, during the collision deformation on the eyelid region, boundary points other than the upper eyelid boundary region may remain stationary, and the remaining vertices are deformed to enable the upper eyelid boundary to coincide with the lower eyelid boundary. By adding the constraints to the Laplace's equation, this process reduces the possibility of eyeball penetration caused in during the collision deformation on the eyelid region, and improves a transfer effect of the second model expression indicating the closed-eye state to the target head model, allowing the target head model to achieve a better "closed-eye" effect.

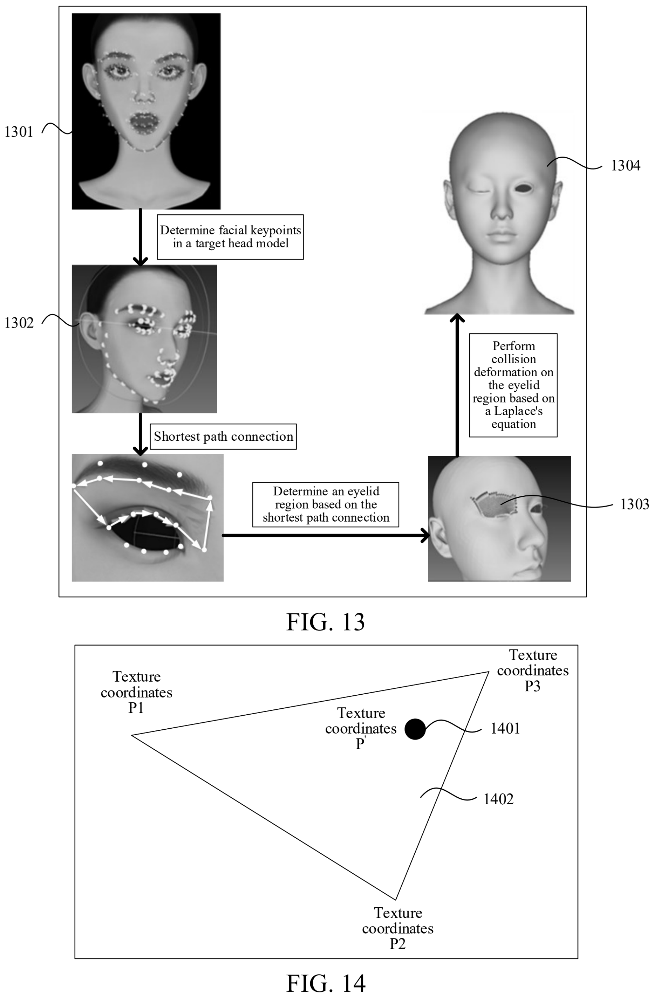

FIG. 13 is a schematic diagram of adjusting an eyelid region according to an embodiment of this application. Reference facial keypoints in the two-dimensional face image may be indicated by label 1301. The model processing device may determine the facial keypoints in the target head model based on the reference facial keypoints in the two-dimensional face image, and a distribution status of the facial keypoints is indicated by label 1302. The eyelid region may be determined from the target head model based on a shortest distance connection (also referred to as a shortest path connection). The determined eyelid region may be indicated by label 1303. Further, after a lower eyelid boundary and an upper eyelid boundary are determined, collision deformation may be performed on the eyelid region based on the Laplace's equation, to obtain a deformed eyelid region. The upper eyelid boundary coincides with the lower eyelid boundary in the deformed eyelid region, and a corresponding adjustment effect may be indicated by label 1304.

In an embodiment, the target head model may be obtained by performing model simplification on a head model region of an interaction model, and a quantity of vertices in the target head model is less than a quantity of vertices in the head model region of the interaction model. In this way, after obtaining the target head model having the second model expression, the model processing device may further: determine, according to positions of texture feature points in the head model region of the interaction model, a mesh region corresponding to the texture feature points in the target head model, and determine a position mapping of the texture feature points in the head model region of the interaction model in the corresponding mesh region in the target head model; determine deformed positions of the texture feature points in the head model region of the interaction model according to the position mapping and positions of vertices included in the corresponding mesh region; and perform deformation on the texture feature points in the head model region of the interaction model according to the deformed positions of the texture feature points in the head model region of the interaction model, to obtain an interaction model having the second model expression. The interaction model may be a model configured to interact with an object, for example, may be a model obtained by face sculpting by a user, a model in a film and television work, or a model in a game scene. In some embodiments, the interaction model may be a human body model, a head model, or the like. The texture feature points may be texture coordinate points corresponding to the vertices. Further, in some embodiments, the positions of the texture feature points may be positions indicated by texture coordinates of the texture coordinate points, and the positions of the vertices included in the mesh region may be positions indicated by texture coordinates of the vertices. The position mapping of the texture feature points in the head model region of the interaction model in the corresponding mesh region in the target head model may be centroid coordinates of the texture feature points in the corresponding mesh region, and the mesh region is a triangle.

In a feasible implementation, in the process of performing model simplification on the head model region of the interaction model, the model processing device may perform texture unwrapping and decomposition on the head model region of the interaction model, to further perform model simplification by reducing vertices. A quantity of vertices that need to be retained for the model simplification may be set according to a specific requirement. For example, it may be set that 10000 vertices are retained. During the model simplification, boundary points of a head model region of the interaction model need to be retained. FIG. 14 is a schematic diagram of a texture coordinate relationship according to an embodiment of this application. A texture feature point in the head model region of the interaction model may be indicated by label 1401. Texture coordinates of the texture feature point may be represented as P', and a corresponding mesh region may be indicated by label 1402. Texture coordinates of three vertices may be respectively represented as P1, P2, and P3. If centroid coordinates of the texture feature point in the corresponding mesh region are represented as $[w_1 \ w_2 \ w_3]$, a deformed position of the texture feature point may be expressed by the following formula 11:

$$P' = w_1P_1 + w_2P_2 + w_3P_3 \quad (11)$$

Since the target head model is obtained by performing model simplification on the head model region of the interaction model, it may be considered that the head model of the interaction model is a high-poly model, and the target head model is a low-poly model. The process is essentially a high-to-low poly expression transfer process. In other words, deformation of the low-poly target head model is transferred to the head model region of the high-poly interaction model, so that the second model expression can be implemented in the head model region of the interaction model. The deformation transfer is performed in the foregoing manner without loss of precision. Therefore, a generated blend shape (namely, a blend shape corresponding to the second model expression) does not require additional smoothing, and the high-poly model can achieve a higher-precision blend shape, resulting in a better effect of the second model expression on the high-poly model.

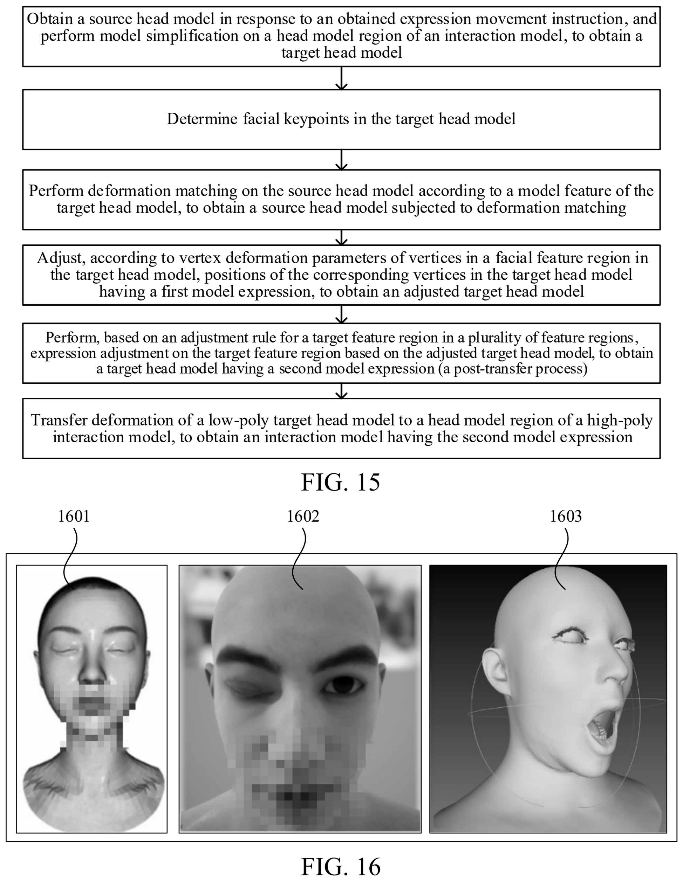

FIG. 15 is a schematic diagram of performing expression transfer on an interaction model according to an embodiment of this application. A model processing device may obtain a source head model in response to an obtained expression movement instruction, and perform model simplification on a head model region of the interaction model, to obtain a target head model. The model processing device determines facial keypoints in the target head model. The model processing device performs deformation matching on the source head model according to a model feature of the target head model, to obtain a source head model subjected to deformation matching. The model feature of the target head model may include positions of the facial keypoints in the target head model. Further, the model processing device may determine a deformation parameter according to the source head model subjected to deformation matching and a deformation relationship from a first model expression to a second model expression in the source head model, and perform expression transfer on the target head model according to the deformation parameter, to obtain a target head model having the second model expression. In the process of performing expression transfer related to the target head model according to the deformation parameter, to obtain the target head model having the second model expression, positions of the corresponding vertices in the target head model having the first model expression may be adjusted according to the vertex deformation parameters of the vertices in the facial feature region in the target head model, to obtain an adjusted target head model. Based on an adjustment rule for a target feature region in a plurality of feature regions, expression adjustment is performed on the target feature region based on the adjusted target head model, to obtain the target head model having the second model expression. The process may be referred to as a post-transfer process. Further, the model processing device may determine a mesh region corresponding to texture feature points in the target head model according to positions of the texture feature points in the head model region of the interaction model, and determine a position mapping of the texture feature points in the head model region of the interaction model in the corresponding mesh region in the target head model; determine deformed positions of the texture feature points in the head model region of the interaction model according to the position mapping and positions of vertices included in the corresponding mesh region; and perform deformation on the texture feature points in the head model region of the interaction model according to the deformed positions of the texture feature points in the head model region of the interaction model, to obtain an interaction model having the second model expression.

FIG. 16 is a schematic diagram of an effect of expression transfer according to an embodiment of this application. It can be known from 1601 and 1602 that the target head model can achieve a good "closed-eye" effect based on the model processing method provided in this solution. In addition, since this method allows for deformation transfer from a low-poly model to a high-poly model without loss of precision, a generated blend shape (namely, a blend shape corresponding to the second model expression) does not require additional smoothing, and the high-poly model can achieve a higher-precision blend shape, resulting in a better effect of the second model expression on the high-mode model. An exemplary effect of a second model expression achieved on the high-poly model may be indicated by label 1603.

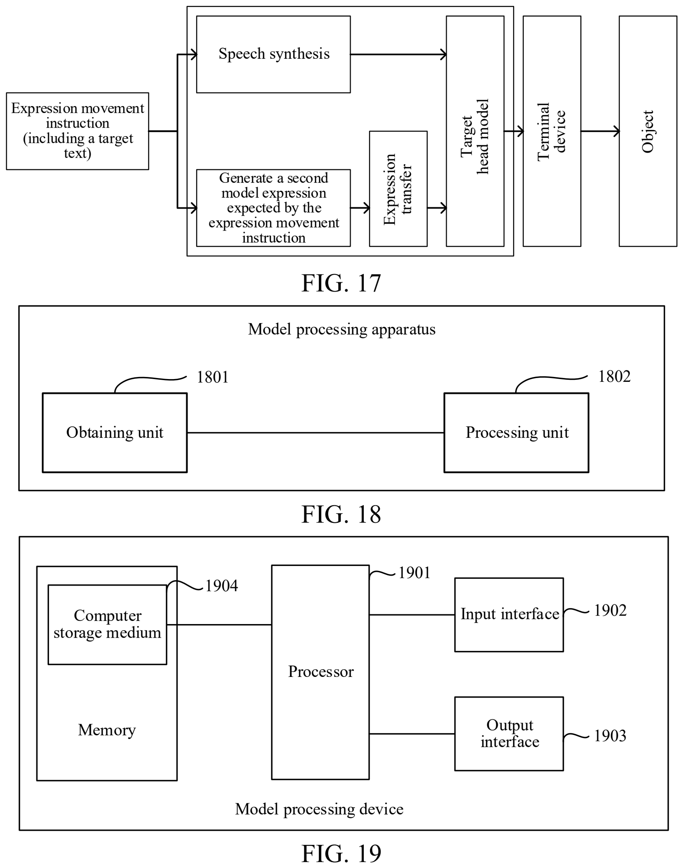

In an embodiment, the model processing method may be applied to an object interaction scenario, for example, may be configured for generating a model having some model expressions to implement object interaction. For example, in a case that the expression movement instruction includes a target text for instructing to generate the second model expression, the model processing device may perform speech synthesis based on the target text, to obtain target speech corresponding to the target text; and output the target head model having the second model expression and the target speech after obtaining the target head model having the second model expression, to perform interaction based on the target head model. The speech synthesis may be performed by a text-to-speech (TTS) module. The target text may be recorded by an object. The target head model may be set by the object, for example, may be a head model of a game character set by the object in a game scene. The target head model and the target speech may be outputted to a terminal device of the object, to implement interaction with the object. FIG. 17 is a schematic diagram of an application scenario according to an embodiment of this application. In a case of receiving the expression movement instruction including the target text configured for instructing to generate the second model expression, the model processing device may perform speech synthesis based on the target text, to obtain the target speech corresponding to the target text; obtain the source head model, and performing instruction analysis on the expression movement instruction to generate, for the source head model, the second model expression expected by the expression movement instruction; transfer the second model expression to the target head model, to obtain the target head model having the second model expression; and output the target head model having the second model expression and the target speech, to perform interaction based on the target head model. In this embodiment of this application, display of an expression of the source head model may be instructed by speech, and the expression may be transferred to the target head model. This can more conveniently achieve expression control over a designed target head model and satisfy requirements of automated and intelligent expression control of a head model.

In this embodiment of this application, in the process of obtaining the target head model having the second model expression by performing expression transfer according to the deformation parameter, positions of corresponding vertices in the target head model having the first model expression may be adjusted first according to the vertex deformation parameters of the vertices in the facial feature region in the target head model, to obtain the adjusted target head model. Based on an adjustment rule for a target feature region in the plurality of feature regions, expression adjustment is further performed on the target feature region based on the adjusted target head model, to obtain the target head model having the second model expression. Deformation transfer of the eyeball region, the eyeball accessory region, the oral accessory region, and the eyelid region in the target head model may be performed, to improve an expression transfer effect of the corresponding regions. Further, the high-poly head model may be simplified to obtain the low-poly target head model, so that expression transfer may be performed in the low-poly target head model, and after the target head model having the second model expression is obtained, corresponding deformation may be transferred from the low-poly model to the high-poly model, to complete transfer of the second model expression in the high-poly head model, thereby accelerating an expression transfer process of the high-poly model.

Based on the related embodiments of the foregoing model processing method, an embodiment of this application provides a model processing apparatus. FIG. 18 is a schematic structural diagram of a model processing apparatus according to an embodiment of this application. The model processing apparatus may include an obtaining unit 1801 and a processing unit 1802. The model processing apparatus shown in FIG. 18 may be configured to perform the following operations.

The obtaining unit 1801 is configured to obtain a source head model in response to an expression movement instruction. The source head model is configured with neutral feature data, and a plurality of pieces of expression feature data relative to the neutral feature data. The processing unit 1802 is configured to perform deformation-related adjustment matching on the source head model to obtain a destination head model according to a pre-defined model feature of a target head model. The processing unit 1802 is further configured to determine a deformation parameter according to the destination head model and a deformation relationship from a first model expression to a second model expression in the source head model. The first model expression in the source head model is determined according to the neutral feature data of the source head model, and the second model expression in the source head model is determined according to expression feature data indicated by the expression movement instruction in the plurality of pieces of expression feature data. The processing unit 1802 is further configured to perform expression adjustment on the target head model according to the deformation parameter, to obtain a target head model having the second model expression.

In an embodiment, in the process of performing the deformation matching on the source head model according to the model feature of the target head model, to obtain the source head model subjected to deformation matching, the processing unit 1802 specifically performs the following operations:

determining a matching relationship between feature points in the source head model and feature points in the target head model according to positions of the feature points in the source head model and positions of the feature points in the target head model, the feature points including: one or two of vertices and facial keypoints in the corresponding models; and performing, according to the matching relationship and using the positions of the feature points in the target head model as reference positions, position adjustment on vertices forming the source head model, to obtain the source head model subjected to deformation matching, distances between the positions of the feature points in the source head model subjected to deformation matching and the corresponding reference positions determined according to the matching relationship satisfying a proximity condition.

In an embodiment, in the process of determining the deformation parameter according to the source head model subjected to deformation matching and the deformation relationship from the first model expression to the second model expression in the source head model, the processing unit 1802 specifically performs the following operations:

determining, according to positions of feature points in the source head model subjected to deformation matching and positions of the corresponding feature points in the source head model, a deformation relationship between the source head model and the source head model subjected to deformation matching, the feature points including: one or two of vertices and facial keypoints in the corresponding models; and determining the deformation parameter according to the deformation relationship between the source head model and the source head model subjected to deformation matching, and the deformation relationship from the first model expression to the second model expression in the source head model.

In an embodiment, in the process of determining the deformation parameter according to the deformation relationship between the source head model and the source head model subjected to deformation matching, and the deformation relationship from the first model expression to the second model expression in the source head model, the processing unit 1802 specifically performs the following operations:

determining, according to the deformation relationship between the source head model and the source head model subjected to deformation matching, a first vertex deformation relationship between reference vertices in the source head model and the corresponding vertices in the source head model subjected to deformation matching; determining, according to the deformation relationship from the first model expression to the second model expression in the source head model, a second vertex deformation relationship between reference vertices in the source head model having the first model expression and the corresponding vertices in the source head model having the second model expression; and determining vertex deformation parameters of target vertices corresponding to the reference vertices in the target head model according to the first vertex deformation relationship of the reference vertices and the second vertex deformation relationship of the reference vertices.

In an embodiment, in the process of performing expression transfer on the target head model according to the deformation parameter, to obtain the target head model having the second model expression, the processing unit 1802 specifically performs the following operations:

determining, in the target head model, a plurality of feature regions forming the target head model; adjusting, according to vertex deformation parameters of vertices in a facial feature region in the target head model, positions of the corresponding vertices in the target head model having the first model expression, to obtain an adjusted target head model, the facial feature region being a feature region having a largest surface area in the plurality of feature regions; and performing, based on an adjustment rule for a target feature region in the plurality of feature regions, expression adjustment on the target feature region based on the adjusted target head model, to obtain the target head model having the second model expression.

In an embodiment, in the process of performing, based on the adjustment rule for the target feature region in the plurality of feature regions, expression adjustment on the target feature region, the processing unit 1802 specifically performs the following operations:

determining a linked feature region corresponding to the target feature region from the plurality of feature regions; and performing follow-up adjustment on the target feature region according to adjustment of the linked feature region based on an instruction of the adjustment rule for the target feature region.

In an embodiment, in the process of performing follow-up adjustment on the target feature region according to the adjustment of the linked feature region based on the instruction of the adjustment rule for the target feature region, the processing unit 1802 specifically performs the following operations:

if an overlapping area between the target feature region and the linked feature region is less than an area threshold, adjusting positions of vertices in the target feature region according to a rigid adjustment method, following the adjustment of positions of vertices in the linked feature region; or if the overlapping area between the target feature region and the linked feature region is greater than or equal to the area threshold, adjusting the positions of the vertices in the target feature region according to a Laplace's method, following the adjustment of the positions of the vertices in the linked feature region.

In an embodiment, in the process of determining the linked feature region corresponding to the target feature region from the plurality of feature regions, the processing unit 1802 specifically performs the following operations:

determining a position relationship between the target feature region and an eyeball region in the plurality of feature regions if the target feature region belongs to an eyeball accessory region; and determining the linked feature region from the eyeball region and the facial feature region according to the position relationship between the target feature region and the eyeball region, if a distance between the target feature region and the eyeball region is less than a distance threshold, the eyeball region being determined as the linked feature region; otherwise, the facial feature region being determined as the linked feature region.

In an embodiment, the plurality of feature regions include the eyeball region; and in the process of determining the eyeball region from the plurality of feature regions, the processing unit 1802 specifically performs the following operations: determining center points and spherical similarities of the feature regions, the spherical similarity of a feature region being configured for indicating a degree to which the corresponding feature region resembles a sphere; and determining the eyeball region from the plurality of feature regions according to distances between the center points of the feature regions and eyeball keypoints in facial keypoints of the adjusted target head model and degrees of resembling a sphere indicated by the spherical similarities of the feature regions.

In an embodiment, the spherical similarity of a feature region is negatively correlated with a degree to which the corresponding feature region resembles a sphere; and

in the process of determining the eyeball region from the plurality of feature regions according to distances between the center points of the feature regions and eyeball keypoints in facial keypoints of the adjusted target head model and degrees of resembling a sphere indicated by the spherical similarities of the feature regions, the processing unit 1802 specifically performs the following operations:

determining the feature regions with the spherical similarity less than a similarity threshold in the feature regions as candidate eyeball regions; determining the distance between the center points of the candidate eyeball regions and the eyeball keypoints in the facial keypoints of the adjusted target head model; and determining the candidate eyeball region indicated by a smallest distance in the candidate eyeball regions as the eyeball region.

In an embodiment, in the process of determining the center points and the spherical similarities of the feature regions, the processing unit 1802 specifically performs the following operations:

determining, for a currently traversed feature region in the feature regions, a center point of the currently traversed feature region according to positions of vertices in the currently traversed feature region; determining, according to the positions of the vertices in the currently traversed feature region and a position of the center point, radii of distances from the vertices in the currently traversed feature region to the center point, and an average radius corresponding to the vertices in the currently traversed feature region; and determining the spherical similarity of the currently traversed feature region according to differences between the radii of distances from the vertices in the currently traversed feature region to the center points and the average radius.

In an embodiment, the target feature region belongs to an eyelid region; the first model expression in the source head model includes an expression indicating that the source head model is in an open-eye state, and the second model expression in the source head model includes an expression indicating that the source head model is in a closed-eye state; and

in the process of performing, based on the adjustment rule for the target feature region in the plurality of feature regions, expression adjustment on the target feature region, the processing unit 1802 specifically performs the following operations:

determining a lower eyelid boundary and an upper eyelid boundary in the eyelid region in the adjusted target head model; and performing collision deformation on the eyelid region according to a size parameter and a position of the eyeball region in the plurality of feature regions and based on a Laplace's equation, to obtain a deformed eyelid region.

In an embodiment, in the process of determining, in the target head model, the plurality of feature regions forming the target head model, the processing unit 1802 specifically performs the following operations:

determining connected regions of the target head model in the target head model, and determining coinciding boundaries between the connected regions; and performing region merging on the connected regions according to determined lengths of the coinciding boundaries, and determining a plurality of connected regions obtained through the region merging as the plurality of feature regions.

In an embodiment, the target head model is obtained by performing model simplification on a head model region of an interaction model, and a quantity of vertices in the target head model is less than a quantity of vertices in the head model region of the interaction model; and the processing unit 1802 is further configured to:

determine, according to positions of texture feature points in the head model region of the interaction model, a mesh region corresponding to the texture feature points in the target head model, and determine a position mapping of the texture feature points in the head model region of the interaction model in the corresponding mesh region in the target head model; determine deformed positions of the texture feature points in the head model region of the interaction model according to the position mapping and positions of vertices included in the corresponding mesh region; and perform deformation on the texture feature points in the head model region of the interaction model according to the deformed positions of the texture feature points in the head model region of the interaction model, to obtain an interaction model having the second model expression.

In an embodiment, the expression movement instruction includes a target text configured for instructing to generate the second model expression; and the processing unit 1802 is further configured to:

perform speech synthesis based on the target text, to obtain target speech corresponding to the target text; and output the target head model having the second model expression and the target speech after obtaining the target head model having the second model expression, to perform interaction based on the target head model.

According to an embodiment of this application, the operations involved in the model processing methods shown in FIG. 2, FIG. 3, and FIG. 7 may be performed by the units in the model processing apparatus shown in FIG. 18. For example, operation S201 shown in FIG. 2 may be performed by the obtaining unit 1801 in the model processing apparatus shown in FIG. 18, and operation S202 to operation S204 shown in FIG. 2 may be performed by the processing unit 1802 in the model processing apparatus shown in FIG. 18. For another example, operation S301 shown in FIG. 3 may be performed by the obtaining unit 1801 in the model processing apparatus shown in FIG. 18, and operation S302 to operation S305 shown in FIG. 3 may be performed by the processing unit 1802 in the model processing apparatus shown in FIG. 18. For another example, operation S701 shown in FIG. 7 may be performed by the obtaining unit 1801 in the model processing apparatus shown in FIG. 18, and operation S702 to operation S706 shown in FIG. 7 may be performed by the processing unit 1802 in the model processing apparatus shown in FIG. 18.

According to another embodiment of this application, units of the model processing apparatus shown in FIG. 18 may be separately or all combined into one or several other units, or one (or more) of the units may be further divided into a plurality of units of smaller functions. In this way, same operations can be implemented, and implementation of the technical effects of embodiments of this application is not affected. The foregoing units are divided based on logical functions. In actual application, a function of one unit may alternatively be implemented by a plurality of units, or functions of a plurality of units are implemented by one unit. For example, the functions implemented by the foregoing units may be implemented by one processing unit. In another embodiment of this application, the model processing apparatus divided based on logic functions may alternatively include another unit. In actual application, these functions may alternatively be cooperatively implemented by another unit and may be cooperatively implemented by a plurality of units.

According to another embodiment of this application, the model processing apparatus shown in FIG. 18 may be constructed and the model processing method in the embodiments of this application may be implemented by running a computer program (including program code) that can perform the operations related to the corresponding methods shown in FIG. 2, FIG. 3, and FIG. 7 on a general-purpose computing device, for example, a computer, including a processing element and a storage element such as a central processing unit (CPU), a random access memory (RAM), a read-only memory (ROM), and the like. The computer program may be stored in, for example, a computer-readable storage medium, loaded in the computing device through the computer-readable storage medium, and run in the computing device.

In the embodiments of this application, after the expression movement instruction is obtained, deformation matching may be performed from the source head model to the target head model, so that the source head model subjected to deformation matching approximates the target head model. Further, the deformation parameter may be determined according to the source head model subjected to deformation matching and the deformation relationship from the first model expression in the source head model to the second model expression indicated by the expression movement instruction, and expression transfer may be performed on the target head model according to the deformation parameter, to obtain the target head model having the second model expression. The second model expression can be automatically transferred from the source head model to the target head model. In this way, expression transformation on some target head models (for example, newly designed head models) can be implemented based on expression transformation of some source head models (for example, standard models). The second model expression can be automatically generated for the target head model, and the second model expression in the source head model can be reused in different head models, further improving the efficiency of generating model expressions by different head models, and reducing human resource consumption.

Based on the related embodiments of the foregoing model processing method and the related embodiments of the model processing apparatus, this application further provides a model processing device. FIG. 19 is a schematic structural diagram of a model processing device according to an embodiment of this application. The model processing device shown in FIG. 19 includes at least a processor 1901, an input interface 1902, an output interface 1903, and a computer storage medium 1904. The processor 1901, the input interface 1902, the output interface 1903, and the computer storage medium 1904 may be connected through a bus or in another manner.

The computer storage medium 1904 may be stored in a memory of the model processing device. The computer storage medium 1904 is configured to store a computer program. The computer program includes program instructions. The processor 1901 is configured to execute the program instructions stored in the computer storage medium 1904. The processor 1901 (or referred to as a central processing unit (CPU)) is a computing core and a control core of the model processing device, is configured to implement one or more instructions, and is specifically configured to load and execute the one or more instructions to implement procedures of corresponding functions of the foregoing model processing method.

An embodiment of this application further provides a computer storage medium (memory). The computer storage medium is a memory device in a model processing device, and is configured to store a program and data. The computer storage medium herein may include a built-in storage medium in a terminal, and certainly may also include an expanded storage medium supported by the terminal. The computer storage medium provides a storage space, and the storage space stores an operating system of the terminal. In addition, the storage space further stores one or more instructions suitable to be loaded and executed by the processor 1901. The instructions may be one or more computer programs (including program code). The computer storage medium herein may be a high-speed random access memory (RAM), or may be a non-volatile memory, for example, at least one magnetic disk memory. In some embodiments, the computer storage medium may be at least one computer storage medium located far from the foregoing processor.

In an embodiment, the processor 1901 may load and execute the one or more instructions stored in the computer storage medium to implement corresponding operations in the method in the model processing method embodiments shown in FIG. 2, FIG. 3, and FIG. 7. During specific implementation, the processor 1901 loads the one or more instructions in the computer storage medium and perform the following operations:

obtaining a source head model in response to an obtained expression movement instruction, the source head model being configured with neutral feature data, and a plurality of pieces of expression feature data relative to the neutral feature data;
performing deformation matching on the source head model according to a model feature of a target head model, to obtain a source head model subjected to deformation matching; determining a deformation parameter according to the source head model subjected to deformation matching and a deformation relationship from a first model expression to a second model expression in the source head model, the first model expression in the source head model being determined according to the neutral feature data of the source head model, and the second model expression in the source head model being determined according to expression feature data indicated by the expression movement instruction in the plurality of pieces of expression feature data; and performing expression transfer on the target head model according to the deformation parameter, to obtain a target head model having the second model expression.

In an embodiment, in the process of performing the deformation matching on the source head model according to the model feature of the target head model, to obtain the source head model subjected to deformation matching, the processor 1901 specifically performs the following operations:

determining a matching relationship between feature points in the source head model and feature points in the target head model according to positions of the feature points in the source head model and positions of the feature points in the target head model, the feature points including: one or two of vertices and facial keypoints in the corresponding models; and

performing, according to the matching relationship and using the positions of the feature points in the target head model as reference positions, position adjustment on vertices forming the source head model, to obtain the source head model subjected to deformation matching, distances between the positions of the feature points in the source head model subjected to deformation matching and the corresponding reference positions determined according to the matching relationship satisfying a proximity condition.

In an embodiment, in the process of determining the deformation parameter according to the source head model subjected to deformation matching and the deformation relationship from the first model expression to the second model expression in the source head model, the processor 1901 specifically performs the following operations:

determining, according to positions of feature points in the source head model subjected to deformation matching and positions of the corresponding feature points in the source head model, a deformation relationship between the source head model and the source head model subjected to deformation matching, the feature points including: one or two of vertices and facial keypoints in the corresponding models; and determining the deformation parameter according to the deformation relationship between the source head model and the source head model subjected to deformation matching, and the deformation relationship from the first model expression to the second model expression in the source head model.

In an embodiment, in the process of determining the deformation parameter according to the deformation relationship between the source head model and the source head model subjected to deformation matching, and the deformation relationship from the first model expression to the second model expression in the source head model, the processor 1901 specifically performs the following operations:

determining, according to the deformation relationship between the source head model and the source head model subjected to deformation matching, a first vertex deformation relationship between reference vertices in the source head model and the corresponding vertices in the source head model subjected to deformation matching; determining, according to the deformation relationship from the first model expression to the second model expression in the source head model, a second vertex deformation relationship between reference vertices in the source head model having the first model expression and the corresponding vertices in the source head model having the second model expression; and determining vertex deformation parameters of target vertices corresponding to the reference vertices in the target head model according to the first vertex deformation relationship of the reference vertices and the second vertex deformation relationship of the reference vertices.

In an embodiment, in the process of performing expression transfer on the target head model according to the deformation parameter, to obtain the target head model having the second model expression, the processor 1901 specifically performs the following operations:

determining, in the target head model, a plurality of feature regions forming the target head model; adjusting, according to vertex deformation parameters of vertices in a facial feature region in the target head model, positions of the corresponding vertices in the target head model having the first model expression, to obtain an adjusted target head model, the facial feature region being a feature region having a largest surface area in the plurality of feature regions; and performing, based on an adjustment rule for a target feature region in the plurality of feature regions, expression adjustment on the target feature region based on the adjusted target head model, to obtain the target head model having the second model expression.

In an embodiment, in the process of performing, based on the adjustment rule for the target feature region in the plurality of feature regions, expression adjustment on the target feature region, the processor 1901 specifically performs the following operations:

determining a linked feature region corresponding to the target feature region from the plurality of feature regions; and performing follow-up adjustment on the target feature region according to adjustment of the linked feature region based on an instruction of the adjustment rule for the target feature region.

In an embodiment, in the process of performing follow-up adjustment on the target feature region according to the adjustment of the linked feature region based on the instruction of the adjustment rule for the target feature region, the processor 1901 specifically performs the following operations:

if an overlapping area between the target feature region and the linked feature region is less than an area threshold, adjusting positions of vertices in the target feature region according to a rigid adjustment method, following the adjustment of positions of vertices in the linked feature region; or if the overlapping area between the target feature region and the linked feature region is greater than or equal to the area threshold, adjusting the positions of the vertices in the target feature region according to a Laplace's method, following the adjustment of the positions of the vertices in the linked feature region.

In an embodiment, in the process of determining the linked feature region corresponding to the target feature region from the plurality of feature regions, the processor 1901 specifically performs the following operations: determining a position relationship between the target feature region and an eyeball region in the plurality of feature regions if the target feature region belongs to an eyeball accessory region; and determining the linked feature region from the eyeball region and the facial feature region according to the position relationship between the target feature region and the eyeball region, if a distance between the target feature region and the eyeball region is less than a distance threshold, the eyeball region being determined as the linked feature region; otherwise, the facial feature region being determined as the linked feature region.

In an embodiment, the plurality of feature regions include the eyeball region; and in the process of determining the eyeball region from the plurality of feature regions, the processor 1901 specifically performs the following operations: determining center points and spherical similarities of the feature regions, the spherical similarity of a feature region being configured for indicating a degree to which the corresponding feature region resembles a sphere; and determining the eyeball region from the plurality of feature regions according to distances between the center points of the feature regions and eyeball keypoints in facial keypoints of the adjusted target head model and degrees of resembling a sphere indicated by the spherical similarities of the feature regions.

In an embodiment, the spherical similarity of a feature region is negatively correlated with a degree to which the corresponding feature region resembles a sphere; and in the process of determining the eyeball region from the plurality of feature regions according to distances between the center points of the feature regions and eyeball keypoints in facial keypoints of the adjusted target head model and degrees of resembling a sphere indicated by the spherical similarities of the feature regions, the processor 1901 specifically performs the following operations: determining the feature regions with the spherical similarity less than a similarity threshold in the feature regions as candidate eyeball regions; determining the distance between the center points of the candidate eyeball regions and the eyeball keypoints in the facial keypoints of the adjusted target head model; and determining the candidate eyeball region indicated by a smallest distance in the candidate eyeball regions as the eyeball region.

In an embodiment, in the process of determining the center points and the spherical similarities of the feature regions, the processor 1901 specifically performs the following operations: determining, for a currently traversed feature region in the feature regions, a center point of the currently traversed feature region according to a positions of vertices in the currently traversed feature region; determining, according to the positions of the vertices in the currently traversed feature region and a position of the center point, radii of distances from the vertices in the currently traversed feature region to the center point, and an average radius corresponding to the vertices in the currently traversed feature region; and determining the spherical similarity of the currently traversed feature region according to differences between the radii of distances from the vertices in the currently traversed feature region to the center points and the average radius.

In an embodiment, the target feature region belongs to an eyelid region; the first model expression in the source head model includes an expression indicating that the source head model is in an open-eye state, and the second model expression in the source head model includes an expression indicating that the source head model is in a closed-eye state; and in the process of performing, based on the adjustment rule for the target feature region in the plurality of feature regions, expression adjustment on the target feature region, the processor 1901 specifically performs the following operations: determining a lower eyelid boundary and an upper eyelid boundary in the eyelid region in the adjusted target head model; and performing collision deformation on the eyelid region according to a size parameter and a position of the eyeball region in the plurality of feature regions and based on a Laplace's equation, to obtain a deformed eyelid region.

In an embodiment, in the process of determining, in the target head model, the plurality of feature regions forming the target head model, the processor 1901 specifically performs the following operations: determining connected regions of the target head model in the target head model, and determining a coinciding boundaries between the connected regions; and performing region merging on the connected regions according to determined lengths of the coinciding boundaries, and determining a plurality of connected regions obtained through the region merging as the plurality of feature regions.

In an embodiment, the target head model is obtained by performing model simplification on a head model region of an interaction model, and a quantity of vertices in the target head model is less than a quantity of vertices in the head model region of the interaction model; and the processor 1901 is further configured to: determine, according to positions of texture feature points in the head model region of the interaction model, a mesh region corresponding to the texture feature points in the target head model, and determine a position mapping of the texture feature points in the head model region of the interaction model in the corresponding mesh region in the target head model; determine deformed positions of the texture feature points in the head model region of the interaction model according to the position mapping and positions of vertices included in the corresponding mesh region; and perform deformation on the texture feature points in the head model region of the interaction model according to the deformed positions of the texture feature points in the head model region of the interaction model, to obtain an interaction model having the second model expression.

In an embodiment, the expression movement instruction includes a target text configured for instructing to generate the second model expression; and the processor 1901 is further configured to:

perform speech synthesis based on the target text, to obtain target speech corresponding to the target text; and output the target head model having the second model expression and the target speech after obtaining the target head model having the second model expression, to perform interaction based on the target head model.

An embodiment of this application provides a computer program product. The computer program product includes a computer program, the computer program being stored in a computer storage medium. A processor of a model processing device reads the computer program from the computer storage medium, and the processor executes the computer program, to cause the model processing device to perform the method embodiments shown in FIG. 2, FIG. 3, and FIG. 7. The computer storage medium may include: a magnetic disk, an optical disc, a read-only memory (ROM), a random access memory (RAM), or the like.

The foregoing is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of claims.

**Claims**

1. A model processing method, comprising:

   obtaining a source head model in response to an expression instruction, the source head model comprising facial expression-neutral feature data, and a plurality of pieces of facial expression feature data relative to the facial expression-neutral feature data;
   performing deformation-related adjustment matching on the source head model to obtain a destination head model according to a pre-defined model feature of a target head model;
   determining a deformation parameter according to the destination head model and a deformation relationship from a first model expression to a second model expression in the source head model, the first model expression in the source head model being determined according to the facial expression-neutral feature data of the source head model, and the second model expression in the source head model being determined according to facial expression feature data indicated by the expression instruction in the plurality of pieces of facial expression feature data; and
   performing expression adjustment on the target head model according to the deformation parameter, to obtain the target head model having the second model expression.

2. The method according to claim 1, wherein the performing deformation-related adjustment matching on the source head model to obtain a destination head model according to a pre-defined model feature of a target head model comprises:

   determining a matching relationship between feature points in the source head model and feature points in the target head model according to positions of the feature points in the source head model and positions of the feature points in the target head model, the feature points comprising one or two of vertices and facial keypoints in the corresponding models; and
   performing, according to the matching relationship and using the positions of the feature points in the target head model as reference positions, position adjustment on vertices forming the source head model, to obtain the destination head model,
   distances between the positions of the feature points in the destination head model and the corresponding reference positions determined according to the matching relationship satisfying a proximity condition.

3. The method according to claim 1 or 2, wherein the determining a deformation parameter according to the destination head model and a deformation relationship from a first model expression to a second model expression in the source head model comprises:

   determining, according to positions of feature points in the destination head model and positions of the corresponding feature points in the source head model, a deformation relationship between the source head model and the destination head model, the feature points comprising: one or two of vertices and facial keypoints in the corresponding models; and

determining the deformation parameter according to the deformation relationship between the source head model and the destination head model, and the deformation relationship from the first model expression to the second model expression in the source head model.

4. The method according to any one of claims 1 to 3, wherein the deformation relationship between the source head model and the destination head model comprises a transformation matrix from vertices of a target triangle in the source head model to the corresponding vertices in the destination head model, the transformation matrix between vertices being determined according to an affine transformation parameter and a translation parameter.

5. The method according to any one of claims 1 to 4, wherein the determining the deformation parameter according to the deformation relationship between the source head model and the destination head model, and the deformation relationship from the first model expression to the second model expression in the source head model comprises:

determining, according to the deformation relationship between the source head model and the destination head model, a first vertex deformation relationship between reference vertices in the source head model and the corresponding vertices in the destination head model;

determining, according to the deformation relationship from the first model expression to the second model expression in the source head model, a second vertex deformation relationship between reference vertices in the source head model having the first model expression and the corresponding vertices in the source head model having the second model expression; and

determining vertex deformation parameters of target vertices corresponding to the reference vertices in the target head model according to the first vertex deformation relationship of the reference vertices and the second vertex deformation relationship of the reference vertices.

6. The method according to any one of claims 1 to 5, wherein the performing expression adjustment on the target head model according to the deformation parameter, to obtain the target head model having the second model expression comprises:

determining, in the target head model, a plurality of feature regions forming the target head model;

adjusting, according to vertex deformation parameters of vertices in a facial feature region in the target head model, positions of the corresponding vertices in the target head model having the first model expression, to obtain an adjusted target head model, the facial feature region being a feature region having a largest surface area in the plurality of feature regions; and

performing, based on an adjustment rule for a target feature region in the plurality of feature regions, expression adjustment on the target feature region based on the adjusted target head model, to obtain the target head model having the second model expression.

7. The method according to any one of claims 1 to 6, wherein the performing, based on an adjustment rule for a target feature region in the plurality of feature regions, expression adjustment on the target feature region comprises:

determining a linked feature region corresponding to the target feature region from the plurality of feature regions; and

performing follow-up adjustment on the target feature region according to adjustment of the linked feature region based on an instruction of the adjustment rule for the target feature region.

8. The method according to any one of claims 1 to 7, wherein the performing follow-up adjustment on the target feature region according to adjustment of the linked feature region based on an instruction of the adjustment rule for the target feature region comprises:

if an overlapping area between the target feature region and the linked feature region is less than an area threshold, adjusting positions of vertices in the target feature region according to a rigid adjustment method, following the adjustment of positions of vertices in the linked feature region; or

if the overlapping area between the target feature region and the linked feature region is greater than or equal to the area threshold, adjusting the positions of the vertices in the target feature region according to a Laplace's method, following the adjustment of the positions of the vertices in the linked feature region.

9. The method according to any one of claims 1 to 8, wherein the determining a linked feature region corresponding to the target feature region from the plurality of feature regions comprises:

   determining a position relationship between the target feature region and an eyeball region in the plurality of feature regions if the target feature region belongs to an eyeball accessory region; and
   determining the linked feature region from the eyeball region and the facial feature region according to the position relationship between the target feature region and the eyeball region,
   if a distance between the target feature region and the eyeball region is less than a distance threshold, the eyeball region being determined as the linked feature region, otherwise, the facial feature region being determined as the linked feature region.

10. The method according to any one of claims 1 to 9, wherein the plurality of feature regions comprise the eyeball region; and a manner of determining the eyeball region from the plurality of feature regions comprises:

    determining center points and spherical similarities of the feature regions, the spherical similarity of a feature region being configured for indicating a degree to which the corresponding feature region resembles a sphere; and
    determining the eyeball region from the plurality of feature regions according to distances between the center points of the feature regions and eyeball keypoints in facial keypoints of the adjusted target head model and degrees of resembling a sphere indicated by the spherical similarities of the feature regions.

11. The method according to any one of claims 1 to 10, wherein the spherical similarity of one feature region is negatively correlated with the degree to which the corresponding feature region resembles a sphere; and
    the determining the eyeball region from the plurality of feature regions according to distances between the center points of the feature regions and eyeball keypoints in facial keypoints of the adjusted target head model and degrees of resembling a sphere indicated by the spherical similarities of the feature regions comprises:

    determining the feature regions with the spherical similarity less than a similarity threshold in the feature regions as candidate eyeball regions;
    determining the distances between the center points of the candidate eyeball regions and the eyeball keypoints in the facial keypoints of the adjusted target head model; and
    determining the candidate eyeball region indicated by a smallest distance in the candidate eyeball regions as the eyeball region.

12. The method according to any one of claims 1 to 11, wherein the determining center points and spherical similarities of the feature regions comprises:

    determining, for a currently traversed feature region in the feature regions, a center point of the currently traversed feature region according to positions of vertices in the currently traversed feature region;
    determining, according to the positions of the vertices in the currently traversed feature region and a position of the center point, radii of distances from the vertices in the currently traversed feature region to the center point, and an average radius corresponding to the vertices in the currently traversed feature region; and
    determining the spherical similarity of the currently traversed feature region according to differences between the radii of distances from the vertices in the currently traversed feature region to the center points and the average radius.

13. The method according to any one of claims 1 to 12, wherein the target feature region belongs to an eyelid region; and
    the first model expression in the source head model comprises an expression indicating that the source head model is in an open-eye state, and the second model expression in the source head model comprises an expression indicating that the source head model is in a closed-eye state; and
    the performing, based on an adjustment rule for a target feature region in the plurality of feature regions, expression adjustment on the target feature region comprises:

    determining a lower eyelid boundary and an upper eyelid boundary in the eyelid region in the adjusted target head model; and
    performing collision deformation on the eyelid region according to a size parameter and a position of the eyeball region in the plurality of feature regions and based on a Laplace's equation, to obtain a deformed eyelid region.

14. The method according to any one of claims 1 to 13, wherein the determining, in the target head model, a plurality of feature regions forming the target head model comprises:

determining connected regions of the target head model in the target head model, and determining coinciding boundaries between the connected regions; and

performing region merging on the connected regions according to determined lengths of the coinciding boundaries, and determining a plurality of connected regions obtained through the region merging as the plurality of feature regions.

15. The method according to any one of claims 1 to 14, wherein the target head model is obtained by performing model simplification on a head model region of an interaction model, and a quantity of vertices in the target head model is less than a quantity of vertices in the head model region of the interaction model; and the method further comprises:

determining, according to positions of texture feature points in the head model region of the interaction model, a mesh region corresponding to the texture feature points in the target head model, and determining a position mapping of the texture feature points in the head model region of the interaction model in the corresponding mesh region in the target head model;

determining deformed positions of the texture feature points in the head model region of the interaction model according to the position mapping and positions of vertices comprised in the corresponding mesh region; and

performing deformation on the texture feature points in the head model region of the interaction model according to the deformed positions of the texture feature points in the head model region of the interaction model, to obtain an interaction model having the second model expression.

16. The method according to any one of claims 1 to 15, wherein the expression instruction comprises a target text configured for instructing to generate the second model expression; and the method further comprises:

performing speech synthesis based on the target text, to obtain target speech corresponding to the target text; and

outputting the target head model having the second model expression and the target speech after obtaining the target head model having the second model expression, to perform interaction based on the target head model.

17. A model processing apparatus, comprising:

an obtaining unit, configured to obtain a source head model in response to an expression instruction, the source head model comprising facial expression-neutral feature data, and a plurality of pieces of expression feature data relative to the facial expression-neutral feature data; and

a processing unit, configured to perform deformation-related adjustment matching on the source head model to obtain a destination head model according to a pre-defined model feature of a target head model ,

the processing unit being further configured to determine a deformation parameter according to the destination head model and a deformation relationship from a first model expression to a second model expression in the source head model, the first model expression in the source head model being determined according to the facial expression-neutral feature data of the source head model, and the second model expression in the source head model being determined according to facial expression feature data indicated by the expression instruction in the plurality of pieces of facial expression feature data; and

the processing unit being further configured to perform expression adjustment on the target head model according to the deformation parameter, to obtain the target head model having the second model expression.

18. A model processing device, comprising an input interface and an output interface, and further comprising:

a processor, configured to implement one or more instructions; and

a computer storage medium, having one or more instructions stored therein, the one or more instructions being suitable for being loaded by the processor to perform the model processing method according to any one of claims 1 to 16.

19. A computer storage medium, having computer program instructions stored therein, the computer program instructions, when executed by a processor, being configured to perform the model processing method according to any one of claims 1 to 16.

EP 4 645 227 A1

**20.** A computer program product, comprising a computer program/instructions, the computer program/instructions, when executed by a processor, implementing the operations of the model processing method according to any one of claims 1 to 16.

32

101    102    103    104

FIG. 1

| Obtain a source head model in response to an obtained expression movement instruction | ∽S201 |

| Perform deformation matching on the source head model according to a model feature of a target head model to be subjected to deformation matching, to obtain a source head model subjected to deformation matching | ∽S202 |

| Determine a deformation parameter according to the source head model subjected to deformation matching and a deformation relationship from a first model expression to a second model expression in the source head model | ∽S203 |

| Perform expression transfer on the target head model according to the deformation parameter, to obtain a target head model having the second model expression | ∽S204 |

FIG. 2

| Obtain a source head model in response to an obtained expression movement instruction | S301 |

↓

| Perform deformation matching on the source head model according to a model feature of a target head model to be subjected to deformation matching, to obtain a source head model subjected to deformation matching | S302 |

↓

| Determine, according to positions of feature points in the source head model subjected to deformation matching and positions of the corresponding feature points in the source head model, a deformation relationship between the source head model and the source head model subjected to deformation matching | S303 |

↓

| Determine a deformation parameter according to a deformation relationship between the source head model and the source head model subjected to deformation matching, and a deformation relationship from a first model expression to a second model expression in the source head model | S304 |

↓

| Perform expression transfer on the target head model according to the deformation parameter, to obtain a target head model having the second model expression | S305 |

FIG. 3

FIG. 4

Normal
vector V$_4$

Vertex V$_3$

Vertex V$_1$

Vertex V$_2$

Normal
vector V$_4$'

Vertex V$_3$'

Vertex V$_1$'

Vertex V$_2$'

## FIG. 5

Source head
model having a
second model
expression

Deformation
relationship

Source head
model
(having a neutral
model
expression)

Deformation
relationship

Deformation
matching

Source head model
subjected to
deformation
matching
(having a neutral
model expression)

Obtain a proximity
mapping table N(i)

Deformation
parameter

Target head
model
(having a neutral
model
expression)

Expression
transfer

Target head
model
(having a
second model
expression)

## FIG. 6

| | |
|---|---|
| Obtain a source head model in response to an obtained expression movement instruction | S701 |
| Perform deformation matching on the source head model according to a model feature of a target head model, to obtain a source head model subjected to deformation matching | S702 |
| Determine a deformation parameter according to the source head model subjected to deformation matching and a deformation relationship from a first model expression to a second model expression in the source head model | S703 |
| Determine, in the target head model, a plurality of feature regions forming the target head model | S704 |
| Adjust, according to vertex deformation parameters of vertices in a facial feature region in the target head model, positions of the corresponding vertices in the target head model having the first model expression, to obtain an adjusted target head model | S705 |
| Perform, based on an adjustment rule for a target feature region in the plurality of feature regions, expression adjustment on the target feature region based on the adjusted target head model, to obtain the target head model having the second model expression | S706 |

FIG. 7

801

FIG. 8

Determine a center point of the eyeball region according to positions of vertices

Perform expression adjustment (rotation based on a blend shape) on the eyeball region

Determine an eyeball region according to determined center points and spherical similarities of feature regions

FIG. 9

Determine, in a target head model according to connected regions of the target head model, a plurality of feature regions forming the target head model

Determine a facial feature region having a largest surface area from the plurality of feature regions, and adjust, according to vertex deformation parameters of vertices in the facial feature region in the target head model, positions of the corresponding vertices in the target head model having a first model expression, to obtain an adjusted target head model

Determine an eyeball region and an eyeball accessory region from the plurality of feature regions

Perform expression adjustment on the eyeball region and the eyeball accessory region based on the adjusted target head model

Determine an oral accessory region from the plurality of feature regions

Perform expression adjustment on the oral accessory region based on the expression adjustment performed on the eyeball region and the eyeball accessory region

FIG. 10

FIG. 11

FIG. 12

1301

Determine facial keypoints in a target head model

1302

Shortest path connection

Determine an eyelid region based on the shortest path connection

1303

Perform collision deformation on the eyelid region based on a Laplace's equation

1304

FIG. 13

Texture coordinates P1

Texture coordinates P3

Texture coordinates P'

1401

1402

Texture coordinates P2

FIG. 14

Obtain a source head model in response to an obtained expression movement instruction, and perform model simplification on a head model region of an interaction model, to obtain a target head model

↓

Determine facial keypoints in the target head model

↓

Perform deformation matching on the source head model according to a model feature of the target head model, to obtain a source head model subjected to deformation matching

↓

Adjust, according to vertex deformation parameters of vertices in a facial feature region in the target head model, positions of the corresponding vertices in the target head model having a first model expression, to obtain an adjusted target head model

↓

Perform, based on an adjustment rule for a target feature region in a plurality of feature regions, expression adjustment on the target feature region based on the adjusted target head model, to obtain a target head model having a second model expression (a post-transfer process)

↓

Transfer deformation of a low-poly target head model to a head model region of a high-poly interaction model, to obtain an interaction model having the second model expression

FIG. 15

1601    1602    1603

FIG. 16

Expression movement instruction (including a target text)

Speech synthesis

Generate a second model expression expected by the expression movement instruction

Expression transfer

Target head model

Terminal device

Object

## FIG. 17

Model processing apparatus

1801

Obtaining unit

1802

Processing unit

## FIG. 18

Model processing device

Memory

1904

Computer storage medium

1901

Processor

Input interface

1902

Output interface

1903

## FIG. 19

## INTERNATIONAL SEARCH REPORT

| International application No. |
| --- |
| **PCT/CN2024/095807** |

**A. CLASSIFICATION OF SUBJECT MATTER**

G06T 11/00(2006.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE; 必应, BING: 表情, 迁移, 头部, 模型, 变形, 匹配, expression, migration, head, model, deformation, match

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117218219 A (TENCENT TECHNOLOGY (SHENZHEN) CO., LTD.) 12 December 2023 (2023-12-12) description, paragraphs 3-275 | 1-20 |
| A | CN 115564642 A (TENCENT TECHNOLOGY (SHENZHEN) CO., LTD.) 03 January 2023 (2023-01-03) description, paragraphs 4-138 | 1-20 |
| A | CN 116168432 A (NANJING GUIJI INTELLIGENT TECHNOLOGY CO., LTD.) 26 May 2023 (2023-05-26) description, paragraphs 5-52 | 1-20 |
| A | CN 115330979 A (TENCENT TECHNOLOGY (SHENZHEN) CO., LTD.) 11 November 2022 (2022-11-11) entire document | 1-20 |
| A | US 2020286284 A1 (LUCASFILM ENTERTAINMENT CO., LTD.) 10 September 2020 (2020-09-10) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 August 2024** | **24 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/095807**

| Patent document cited in search report | | | Publication date (day/month/year) | Patent family member(s) | | | Publication date (day/month/year) |
|---|---|---|---|---|---|---|---|
| CN | 117218219 | A | 12 December 2023 | None | | | |
| CN | 115564642 | A | 03 January 2023 | CN | 115564642 | B | 21 March 2023 |
| CN | 116168432 | A | 26 May 2023 | None | | | |
| CN | 115330979 | A | 11 November 2022 | None | | | |
| US | 2020286284 | A1 | 10 September 2020 | US | 11069135 | B2 | 20 July 2021 |
| | | | | CA | 3074547 | A1 | 07 September 2020 |
| | | | | CA | 3074547 | C | 28 June 2022 |
| | | | | AU | 2020201618 | A1 | 24 September 2020 |
| | | | | AU | 2020201618 | B2 | 05 August 2021 |
| | | | | NZ | 762338 | A2 | 30 September 2021 |
| | | | | GB | 2584192 | A | 25 November 2020 |
| | | | | GB | 2584192 | B | 06 December 2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310803347